# FASCICULE DE BREVET EUROPEEN

(11) **EP 4 053 426 B1**
(45) Date de publication et mention de la délivrance du brevet: **14.08.2024**
(21) Numéro de dépôt: 22159388.2
(22) Date de dépôt: 01.03.2022
(51) Int. Cl.: F16D 13/52, F16D 21/06, F16D 25/0638

(54) **PROCEDE DE FABRICATION D'UN PORTE-DISQUES D'EMBRAYAGE ET SYSTEME D'EMBRAYAGE COMPRENANT UN TEL PORTE-DISQUES**
VERFAHREN ZUR HERSTELLUNG EINES KUPPLUNGSSCHEIBENTRÄGERS UND KUPPLUNGSSYSTEM MIT EINEM SOLCHEN SCHEIBENTRÄGER
METHOD OF MANUFACTURING A CLUTCH DISC HOLDER AND CLUTCH SYSTEM COMPRISING SUCH A DISC HOLDER

(30) Priorité: 03.03.2021 FR 2102058
(43) Date de publication de la demande: 07.09.2022
(73) Titulaire: VALEO EMBRAYAGES, 80009 Amiens (FR)
(72) Inventeur: CORNET, Vincent, 80009 Amiens (FR); VUAROQUEAUX, Guillaume, 80009 Amiens (FR); DOLE, Arnaud, 80009 Amiens (FR)
(74) Mandataire: Valeo Powertrain Systems

(56) Documents cités:
- EP-A2- 1 645 766
- DE-A1- 102013 216 747
- US-A1- 2017 028 454

## Description

L'invention se rapporte au domaine des transmissions de couple pour engin de mobilité, disposés par exemple entre un moteur thermique et une boite de vitesses, dans lequel une machine électrique tournante est disposée en parallèle à l'axe principal de la transmission ou coaxiale à l'axe principal de transmission.

L'invention concerne notamment un porte-disques pour embrayage, équipant un engin de mobilité, ce dernier étant par exemple un poids lourd, un véhicule agricole ou un véhicule de transport en commun. Le véhicule automobile peut être de type hybride dans lequel une machine électrique tournante est disposée dans la chaîne de transmission de couple. L'invention concerne aussi un procédé de fabrication d'un tel porte-disques, ainsi qu'un mécanisme d'embrayage comprenant un tel porte-disques.

Le système de transmission de couple peut être par exemple un double embrayage humide ou un triple embrayage humide, de type multidisque. Un embrayage multidisque comporte généralement des flasques liés en rotation à un porte-disques d'entrée formant le moyen d'entrée de couple et des disques de friction liés en rotation à des porte-disques de sortie. Le porte-disques d'entrée comprend en outre une extension axiale cannelée, liée solidairement à un voile d'entrée, agencée pour recevoir les flasques de l'embrayage humide, par exemple sur son diamètre intérieur.

De manière connue, le porte-disques et le voile d'entrée de couple sont fixés ensemble par plusieurs opérations complexes, telles que : la réalisation d'une portée cylindrique cannelée sur le porte-disques, la réalisation d'une portée cylindrique externe sur le voile, l'emmanchement de la portée cylindrique cannelée du porte-disques sur la portée cylindrique externe du voile, ainsi que leur assemblage par soudure. Des exemples de porte-disques sont présentés dans les documents DE102013216747 A1, EP1645766 A2 et US2017028454 A1.

Cependant, cette solution présente des inconvénients. L'assemblage bout à bout impose un jeu très faible entre les pièces et leur contour géométrique cylindrique. Ces derniers exigent d'être rectiier, par usinages supplémentaires, en des formes adaptées à la soudure laser.

Ceci conduit en général les fabricants à surdimensionner l'épaisseur de la cannelure globale formant l'extension axiale au cours de leur fabrication, en particulier à son extrémité, laissant une marge de matière suffisante pour re-usiner sans la détériorer. Surdimensionner l'épaisseur permet également de renforcer l'extrémité de la cannelure, en évitant qu'elle puisse s'expanser ou à se déformer, lors de grandes vitesses en rotation.

Il existe aujourd'hui le besoin de réduire l'encombrement et d'alléger le poids du mécanisme d'embrayage, en réduisant les dimensions superflues du porte-disques, la quantité de matière ou l'épaisseur de son extension axiale.

L'invention a notamment pour but d'apporter une solution simple, efficace et économique à ce problème.

Dans ce but, l'invention propose, selon un premier aspect, un procédé de fabrication d'un porte-disques pour système de transmission de couple, comprenant au moins les étapes suivantes :
a) Découpage d'une tôle d'axe X de révolution ;
b) Emboutissage de la tôle pour former un fond et un bord cylindrique ;
c) Formage à froid d'une cannelure par enfoncements d'une partie du bord cylindrique, l'extrémité libre du bord cylindrique étant exempte d'enfoncements ;
d) Cintrage de l'extrémité libre du bord cylindrique sous la forme d'une collerette.
e) Usinage de l'extrémité libre du bord cylindrique pour former un logement.

On s'affranchit ici des contraintes de surépaisseur pour finaliser la forme du porte-disques, en particulier au niveau de l'extrémité libre qui n'est pas enfoncée. Le formage à froid est réalisé de manière précise sur une seule des parties du bord cylindrique, et non sur la totalité du flanc du bord cylindrique. On réduit au minimum la matière nécessaire pour réaliser l'extrémité libre et le logement, sans que la formation par enfoncements de la cannelure y soit affectée.

Grâce à ces caractéristiques, on limite la perte de matière et l'encombrement de l'extrémité libre du bord cylindrique, celle-ci ne formant pas de cannelure. L'usinage de l'extrémité libre peut être réalisé de manière simplifiée, sans surcout ni surplus de matière pour former le logement. Le poids d'un tel porte-disques est réduit.

L'étape d'usinage permet de définir et localiser au sein du logement un appui plan qui peut recevoir un élément d'entrainement à assembler avec le porte-disques. Leur futur assemblage peut être alors simplifé.

Le premier aspect de l'invention, peut présenter l'une ou l'autre des caractéristiques décrites ci-dessous, combinées entre elles ou prises indépendamment les unes des autres :
- Le fond et le bord cylindrique peuvent être formés par découpage et emboutissage d'une seule tôle ;
- Le fond et le bord cylindrique peuvent être reliés directement l'un à l'autre ;
- Les enfoncements peuvent être réalisés par un outillage de formage à froid, plus précisément, par un ou plusieurs rouleaux profilés déformant l'un des flancs du bord cylindrique. Le ou les rouleaux profilés se déplacent partiellement le long du bord cylindrique, c'est-à-dire sur une seule des parties du bord cylindrique, pour le déformer ;
- Les enfoncements réalisés par un outillage de formage à froid, peuvent être supérieure à l'épaisseur de l'extrémité libre du bord cylindrique, notamment après usinage du logement ;
- Les enfoncements peuvent être réalisés depuis l'extérieur du bord cylindrique, autrement dit depuis la périphérie externe du bord cylindrique, par un outillage de formage à froid. Dès lors, ils forment une cannelure interne ;
- En d'autres termes, les enfoncements peuvent être réalisés radialement à l'intérieur par rapport à l'extrémité libre du bord cylindrique, de telle sorte à former une cannelure interne. Dès lors, les enfoncements peuvent être réalisés radialement en direction de l'axe X par rapport à l'extrémité libre du bord cylindrique ;
- Une série de rouleaux profilés peut être disposée tout autour du bord cylindrique, de sorte à former conjointement lesdits enfoncements par déformation lors du formage à froid. De ce fait les rouleaux peuvent se déplacer ensemble de manière synchrone le long du bord cylindrique, lors de l'étape de formage à froid. Dès lors, chaque enfoncement est réalisé par un rouleau. Lesdits rouleaux peuvent être répartis de manière équidistante ;
- Les enfoncements peuvent délimiter les dents de la cannelure ;
- L'espace entre les enfoncements peut délimiter les gorges délimitées entre les dents de la cannelure ;
- Lors du formage à froid, les rouleaux profilés sont configurés de sorte à réaliser une répartition régulière des dents ou enfoncements tout autour de l'axe X.Autrement dit les enfoncements peuvent être répartis de manière équidistante, ou selon une répartition angulaire régulière ;
- Les enfoncements peuvent être réalisés lors du formage à froid sur une zone intermédiaire du bord cylindrique, dite zone de formage.
- Cette zone de formage peut être distante axialement de l'extrémité du bord cylindrique ;
- Cette zone de formage peut être distante axialement du fond ;
- Cette zone de formage peut s'étendre axialement sur 35 à 95 % de la longueur axiale disponible du bord cylindrique. On entend par « longueur axiale disponible », l'élongation axiale du bord cylindrique qui s'étend axialement du fond jusqu'à l'extrémité libre. Cet intervalle de valeur renforce la cannelure et garantit sa durée de vie ;
- Cette zone de formage peut définir la zone centrale du bord cylindrique ;
- Les enfoncements peuvent se développer radialement à l'intérieur du bord cylindrique. Les enfoncements peuvent s'étendre jusqu'à un diamètre intérieur selon l'axe X, dit diamètre intérieur D_{C1} de la cannelure ;
- Les enfoncements peuvent définir un diamètre extérieur selon l'axe X, dit diamètre extérieur D_{C2} de la cannelure ;
- Le diamètre extérieur D_{C2} peut être défini par la position du rouleau réalisant lesdits enfoncements selon l'axe X, en particulier par le diamètre externe dudit rouleau réalisant lesdits enfoncements ;
- Le diamètre intérieur D_{C1} de la cannelure peut être définie sur la crête de la dent de la cannelure interne ;
- Le diamètre extérieur D_{C2} de la cannelure peut être définie sur le fond de la gorge de la cannelure interne ;
- Le fond peut comprendre un alésage, qui définit un diamètre intérieur D_{F1} du fond du porte-disques. Plus le diamètre intérieur D_{F1} du fond est important, plus le fond peut être d'élongation radiale réduite ;
- Notamment les enfoncements peuvent décalés radialement par rapport à l'extrémité libre du bord cylindrique ;
- Notamment les enfoncements peuvent être réalisés en retrait par rapport à l'extrémité libre du bord cylindrique. L'avantage est de former l'extrémité libre du bord cylindrique de sorte qu'elle soit la plus éloignée de l'axe X ;
- Les enfoncements peuvent être disposés axialement entre le logement et le fond ;
- Les enfoncements peuvent être décalés axialement par rapport à l'extrémité libre du bord cylindrique, lors du formage à froid. L'avantage est de former distinctement l'extrémité libre du bord cylindrique de la cannelure.
- Une marge de sécurité peut être défnie sur la zone intermédiaire. Le déplacement du rouleau est optimisé : on interrompt le déplacement de l'outillage de formage à froid, avant qu'il n'atteigne l'extrémité libre du bord cylindrique.
- On entend par « marge de sécurité », un espacement axial défini aux abords de la zone intermédiaire ;
- A titre d'exemple, la marge de sécurité peut être définie suivant les dimensions de l'outillage de formage à froid, pour que ce dernier ne puisse enfoncer ou empiéter sur l'extrémité libre du bord cylindrique ;
- Dans un premier cas, les enfoncements peuvent réalisés axialement à partir du fond, lors du formage à froid. L'avantage est de relier directement le fond et la cannelure interne résultante l'un à l'autre ;
- Dans un autre cas, les enfoncements peuvent réalisés axialement à partir d'une portion intermédiaire du bord cylindrique. L'avantage est que les enfoncements soient distants axialement du fond ;
- En d'autres termes, une portion intermédiaire du bord cylindrique peut être réalisée lors de l'emboutissage de la tôle, et elle s'étend axialement depuis le fond. Ladite portion intermédiaire est ainsi reliée directement au fond ;
- La portion intermédiaire du bord cylindrique peut être délimitée axialement entre le fond et les enfoncements ;
- Le diamètre extérieur de la portion intermédiaire peut être réduit par rapport à celui du bord cylindrique, notamment par rapport aux enfoncements, de sorte que l'outillage de formage à froid puisse atteindre la zone intermédiaire. On ne gêne pas la réalisation des enfoncements lors du formage à froid, puisque le diamètre extérieur de la portion intermédiaire est réduit par rapport au reste du flanc du bord cylindrique. Dès lors, le bord cylindrique peut être formé successivement de la portion intermédiaire, des enfoncements et de l'extrémité libre ;
- L'extrémité libre du bord cylindrique peut comprendre une zone Z_{E} libre exempte d'enfoncements. La zone Z_{E} libre de l'extrémité libre peut s'étendre axialement sur 2% à 20% de la longueur axiale disponible du bord cylindrique ;
- Cette zone Zε libre peut s'étendre axialement sur 4% et 10% de la longueur axiale disponible du bord cylindrique ;
- L'élongation axiale de la portion intermédiaire peut être supérieure à la zone Z_{E} libre de l'extrémité libre ;
- L'élongation axiale de la portion intermédiaire, dit zone de la portion intermédiaire, peut s'étendre axialement sur 5% à 60% de la longueur axiale disponible du bord cylindrique ;
- En particulier, la longueur axiale disponible du bord cylindrique est la somme des zones respectivement de l'extrémité libre, des enfoncements et de la portion intermédiaire ;
- La portion intermédiaire peut s'étendre radialement selon une première épaisseur Ep1 ;
- Les diamètres intérieur D_{C1} et extérieur D_{C2} de la cannelure peuvent définir une deuxième épaisseur Ep2 ;
- L'épaisseur Ep1 de la portion intermédiaire peut être supérieure à l'épaisseur Ep2 des enfoncements ;
- L'épaisseur Ep2 de la cannelure peut être supérieure à l'épaisseur Ep3 de l'extrémité libre du bord cylindrique ;
- Dans un premier cas, l'extrémité libre peut être formée axialement dans le prolongement du diamètre extérieur du bord cylindrique. En particulier, l'extrémité libre peut être formée axialement dans le prolongement de l'espace délimité entre les enfoncements. Dès lors, l'extrémité libre peut être formée dans le prolongement des gorges de la cannelure interne. Les étapes de fabrication sont simplifiées, étant donné que le prolongement de la gorge forme partiellement l'ébauche de l'extrémité libre, sans avoir à retravailler toute la forme de l'extrémité libre ;
- Dans ce cas, le diamètre extérieur D_{B2} du bord cylindrique peut être formé de telle sorte à être sensiblement constant depuis la zone comprenant les enfoncements jusqu'à l'extrémité libre. L'avantage est d'être compact radialement Le diamètre extérieur D_{E2} de l'extrémité libre peut être égale au diamètre extérieur D_{C2} de la cannelure.
- Dans un autre cas, l'extrémité libre peut être formée radialement à l'extérieur de l'espace délimité entre les enfoncements. Dès lors, l'extrémité libre peut être en retrait par rapport à la cannelure;
- Le diamètre extérieur D_{E2} de l'extrémité libre peut être supérieur au diamètre extérieur D_{C2} de la cannelure ;
- La portion intermédiaire peut être en retrait par rapport aux enfoncements, de sorte à ne pas gêner la réalisation desdits enfoncements. La réalisation de la série d'enfoncements et de la cannelure résultante est simplifiée, puisque le diamètre extérieur D_{P2} de la portion intermédiaire est inférieur au diamètre extérieur D_{C2} de la cannelure ;
- L'étape de cintrage peut être réalisé de telle sorte que l'extrémité libre puisse présenter l'une ou l'autre des caractéristiques suivantes :
   - l'extrémité libre soit délimitée radialement à l'extérieur par rapport aux enfoncements du bord cylindrique ; et/ou
   - l'extrémité libre puisse s'étendre axialement de manière continue sous la forme d'un cylindre ; et/ou
   - l'extrémité libre puisse s'étendre axialement sous la forme d'une collerette continue autour de l'axe X ; et/ou
   - l'extrémité libre puisse s'étendre axialement de manière continue autour de l'axe X ;
- Un usinage externe de l'extrémité libre du bord cylindrique peut être réalisé, pour former un logement ouvert radialement sur l'extérieur. Le porte-disques peut être un porte-disques interne ;
- Un usinage interne de l'extrémité libre du bord cylindrique peut être réalisé, pour former un logement ouvert radialement sur l'intérieur. Le porte-disques peut être un porte-disques externe. Le logement peut être alors délimité entre son diamètre intérieur D_{L1} et le diamètre extérieur D_{C2} de la cannelure. La paroi annulaire du logement peut être délimitée entre le diamètre intérieur D_{L1} du logement et le diamètre extérieur D_{C2} de la cannelure ;
- L'usinage de l'extrémité libre peut définir un diamètre intérieur Du du logement selon l'axe X;
- L'étape d'usinage peut être réalisé sur l'extrémité libre de sorte à délimiter un logement. L'usinage de l'extrémité libre est telle qu'elle délimite un logement présentant l'une ou l'autre des caractéristiques suivantes :
   - le logement peut être réalisé sur 360 degrés ;
   - le logement peut former une portée cylindrique, de préférence de forme continue ;
   - le logement peut comprendre une surface d'appui axial du logement de préférence de forme discontinue ;
   - la surface d'appui axial de forme discontinue du logement peut être formée :
      - d'une paroi annulaire, de préférence continue tout autour de l'axe X ; et
      - de portions d'appui internes angulairement espacés;
   - le diamètre intérieur Du du logement soit supérieur au diamètre extérieur D_{C2} de la cannelure ;
   - le diamètre intérieur Du du logement soit supérieur au diamètre intérieur D_{C1} de la cannelure.
- De manière détaillée, le logement peut comprendre :
   - une portée cylindrique, réalisée intégralement par usinage de l'extrémité libre
   - une surface d'appui axial discontinue, réalisée partiellement:
      - par usinage de l'extrémité libre, de sorte à former la paroi annulaire ; et
      - par formage à froid de la cannelure, de sorte à former des portions d'appui internes espacés ;

L'invention propose également selon un deuxième aspect, un porte-disques, de forme de révolution selon un axe X, pour système de transmission de couple, comprenant :
- un fond et
- un bord cylindrique s'étendant axialement à partir du fond jusqu'à une extrémité libre, comprenant :
   - une cannelure interne, adaptée pour supporter un ensemble multidisque d'embrayage,
      ladite cannelure étant formée d'une alternance de dents et de gorges, et
   - un logement disposé sur l'extrémité libre du bord cylindrique, comprenant une portée cylindrique interne et une surface d'appui axial discontinue.

Le besoin de matière pour le logement est réduit au minimum, étant donné qu'on réalise un logement exempte d'une continuité de matière s'étendant tout autour de l'axe X. Grâce à cette surface d'appui axial de forme discontinue, on s'affranchit des contraintes de surépaisseur : le logement s'étend sous une forme discontinue de matière autour de l'axe X, tout en conservant sa fonction de loger l'extrémité d'une autre pièce (tel un élément d'entrainement).

Grâce à ces caractéristiques, on réalise la surface d'appui axial du logement avec moins de matière, sans que cela n'impacte le reste du porte-disques, notamment sa cannelure. L'encombrement est limité en particulier au niveau de l'extrémité libre du bord cylindrique. Les pertes de matières sont réduites. Le poids global est aussi réduit

De préférence, ce porte-disques peut être réalisé par ledit procédé de fabrication susmentionné dans le premier aspect de réalisation de l'invention. L'avantage est ainsi de former à froid une cannelure par enfoncements d'une seule partie du bord cylindrique, l'extrémité libre du bord cylindrique étant exempte d'enfoncements. En d'autres termes, la cannelure est localisée sur le bord cylindrique et ne peut être réaliser sur l'extrémité libre.

Le deuxième aspect de l'invention, peut présenter l'une ou l'autre des caractéristiques décrites ci-dessous, combinées entre elles ou prises indépendamment les unes des autres :
- Le fond et le bord cylindrique peuvent être formés par découpage et emboutissage d'une seule tôle ;
- Le fond et le bord cylindrique peuvent être reliés directement l'un à l'autre ;
- La longueur axiale disponible du bord cylindrique peut s'étendre du fond jusqu'à l'extrémité libre ;
- Par cannelure, on entend une alternance de dents et de gorges, localisées au niveau d'une zone ;
- La cannelure peut être réalisée sur une zone intermédiaire du bord cylindrique, dite zone de formage.
- Cette zone de formage peut être distante axialement de l'extrémité du bord cylindrique ;
- Cette zone de formage peut être distante axialement du fond ;
- Cette zone de formage peut s'étendre axialement sur 35 à 95 % de la longueur axiale disponible du bord cylindrique. On entend par « longueur axiale disponible », l'élongation axiale du bord cylindrique qui s'étend axialement du fond jusqu'à l'extrémité libre. Cet intervalle de valeur renforce la cannelure et garantit sa durée de vie;
- Cette zone de formage peut définir la zone centrale du bord cylindrique ;
- En d'autres termes, la cannelure peut être formée au niveau d'une zone centrale du bord cylindrique ;
- En d'autres termes, le bord cylindrique peut comprendre sur sa périphérie externe une série d'enfoncements régulièrement répartis autour de l'axe X, ladite série d'enfoncements étant agencée pour former l'alternance de dents et de gorges. La cannelure interne peut être réalisée par enfoncements d'une partie du bord cylindrique de telle sorte que la partie restante du bord cylindrique forme une extrémité libre du bord cylindrique.
- De ce fait, les enfoncements peuvent délimiter lesdites dents de la cannelure interne, tandis que l'espace entre les enfoncements peut délimiter lesdites gorges de la cannelure interne ;
- La cannelure interne peut être réalisée par formage à froid d'une seule des parties du bord cylindrique. A titre d'exemple, le bord cylindrique peut être formé de deux extensions axiales, de préférence distinctes l'une de l'autre ;
- La cannelure interne peut être réalisée par au moins un rouleau profilé se déplaçant partiellement le long du bord cylindrique, autrement dit pour déformer par enfoncements une seule des parties du bord cylindrique ;
- La cannelure interne peut être décalée axialement par rapport à l'extrémité libre du bord cylindrique. L'avantage est de former distinctement la zone intermédiaire de la cannelure de la zone libre de l'extrémité libre du bord cylindrique ;
- La cannelure interne peut être intercalée axialement entre le logement et le fond ;
- Les dents de la cannelure interne peuvent être intercalées axialement entre le logement et le fond ;
- Les dents de la cannelure interne peuvent être décalées axialement de l'extrémité libre du bord cylindrique ;
- La cannelure interne peut être décalée axialement par rapport à l'extrémité libre du bord cylindrique ;
- La cannelure interne, notamment ses dents, peuvent s'étendre radialement à l'intérieur du bord cylindrique ;
- Les enfoncements peuvent s'étendre jusqu'à un diamètre intérieur selon l'axe X, dit diamètre intérieur D_{C1} de la cannelure. La cannelure peut définir un diamètre extérieur D_{C2} selon l'axe X;
- Le diamètre extérieur D_{C2} peut être défini par la position du rouleau réalisant lesdits enfoncements selon l'axe X, en particulier par le diamètre externe dudit rouleau réalisant lesdits enfoncements ;
- Le diamètre intérieur D_{C1} de la cannelure peut être définie sur la crête de la dent de la cannelure interne ;
- Le diamètre extérieur D_{C2} de la cannelure peut être définie sur le fond de la gorge de la cannelure interne ;
- Le fond peut comprendre un alésage, qui définit un diamètre intérieur D_{F1} du fond du porte-disques. Plus le diamètre intérieur D_{F1} du fond est important, plus le fond peut être d'élongation radiale réduite ;
- Dans un premier exemple, le fond et la cannelure interne peuvent être reliés directement l'un à l'autre ;
- Dans un autre exemple, une portion intermédiaire cylindrique peut être réalisée axialement entre le fond et les enfoncements, autrement dit, disposée axialement entre le fond et la cannelure. Dès lors, le bord cylindrique peut être formé successivement de la portion intermédiaire, de la cannelure et de l'extrémité libre ;
- La portion intermédiaire peut s'étendre axialement selon une élongation axiale formée depuis le fond ;
   - La portion intermédiaire peut s'étendre radialement selon une première épaisseur Ep1 ;
   - Les diamètres intérieur D_{C1} et extérieur D_{C2} de la cannelure peuvent définir entre eux une deuxième épaisseur Ep2. L'épaisseur Ep1 de la portion intermédiaire peut être supérieure à l'épaisseur Ep2 des enfoncements ;
   - L'épaisseur Ep3 de l'extrémité libre du bord cylindrique peut être inférieure à l'épaisseur Ep2 de la cannelure ;

   -- Dans un premier cas, l'extrémité libre peut être formée axialement dans le prolongement du diamètre extérieur du bord cylindrique. En particulier, l'extrémité libre peut être formée axialement dans le prolongement de l'espace délimité entre les enfoncements. Les étapes de fabrication sont simplifiées, étant donné que le prolongement de la gorge forme partiellement l'ébauche de l'extrémité libre, sans avoir à retravailler toute la forme de l'extrémité libre ;
- Dans ce cas, le diamètre extérieur D_{B2} du bord cylindrique peut être formé de telle sorte à être sensiblement constant depuis la zone comprenant les enfoncements jusqu'à l'extrémité libre. Cette zone comprenant les enfoncements sera nommée par la suite zone de formage. L'avantage est d'être compact radialement Le diamètre extérieur D_{E2} de l'extrémité libre peut être égale au diamètre extérieur D_{C2} de la cannelure ;
- Dans un autre cas, l'extrémité libre peut être radialement en retrait par rapport à la cannelure;
- Le diamètre extérieur D_{E2} de l'extrémité libre peut être supérieur au diamètre extérieur D_{C2} de la cannelure ;
- La portion intermédiaire peut être en retrait par rapport à la cannelure, de sorte à ne pas gêner la réalisation desdits enfoncements. La réalisation de la série d'enfoncements et de la cannelure résultante est simpliiée, puisque le diamètre extérieur D_{P2} de la portion intermédiaire est inférieur au diamètre extérieur D_{C2} de la cannelure ;
- L'élongation axiale de la portion intermédiaire peut être supérieure à la zone Z_{E} libre de l'extrémité libre ;
- L'élongation axiale de la portion intermédiaire, dit zone de la portion intermédiaire, peut s'étendre axialement sur 5% à 60% de la longueur axiale disponible du bord cylindrique ;
- En particulier, la longueur axiale disponible du bord cylindrique est la somme des zones respectivement de l'extrémité libre, de formage des enfoncements et de la portion intermédiaire ;
- La portion intermédiaire peut s'étendre radialement selon une première épaisseur Ep1 ;
- Les diamètres intérieur D_{C1} et extérieur D_{C2} de la cannelure peuvent définir une deuxième épaisseur Ep2 ;
- L'épaisseur Ep1 de la portion intermédiaire peut être supérieure à l'épaisseur Ep2 des enfoncements ;
- L'épaisseur Ep2 de la cannelure peut être supérieure à l'épaisseur Ep3 de l'extrémité libre du bord cylindrique ;
- L'extrémité libre du bord cylindrique peut s'étendre axialement de manière continue, par exemple sous la forme d'un cylindre. Notamment, l'extrémité libre peut s'étendre axialement sous la forme d'une collerette continue ;
- L'intérieur usinée de l'extrémité libre peut définir un diamètre intérieur Du du logement selon l'axeX ;
- L'usinage de l'extrémité libre peut former une surface d'appui axial du logement ;
- De préférence, la surface d'appui axial du logement peut être de forme discontinue. Dès lors, la surface d'appui axial discontinue du logement peut être formée d'une paroi annulaire et de portions d'appui internes ;
- Le logement peut être réalisé sur 360 degrés. De ce fait, on forme une portée cylindrique continue et une paroi annulaire continue tout autour de l'axe X ;
- Le logement peut être formé en partie par l'espace délimité entre les enfoncements. Le logement peut comprendre une surface d'appui axial discontinue formée en partie par l'espace délimité entre les enfoncements ;
- La paroi annulaire du logement peut être formée en partie par l'espace délimité entre les enfoncements ;
- L'usinage de l'extrémité libre peut être réalisé de telle sorte que le diamètre intérieur Du du logement soit supérieur au diamètre extérieur D_{C2} de la cannelure. En particulier, l'usinage de l'extrémité libre peut être réalisé de telle sorte que le diamètre intérieur D_{L1} du logement soit supérieur au diamètre intérieur D_{C1} de la cannelure.
- Le logement peut être formé en partie par les extrémités des enfoncements ;
- En d'autres termes, la surface d'appui axial discontinue est définie en partie par les extrémités desdits enfoncements. Les portions d'appui internes du logement peuvent être formée par les extrémités des enfoncements ;
- De manière détaillée, le logement peut comprendre :
   - une portée cylindrique, réalisée intégralement par usinage de l'extrémité libre
   - une surface d'appui axial discontinue, réalisée :
      - en partie par usinage de l'extrémité libre, de sorte à former la paroi annulaire ; et
      - en partie par formage à froid de la cannelure, de sorte à former des portions d'appui internes espacés ;
- Le logement peut être formé par un usinage externe de l'extrémité libre du bord cylindrique de sorte à être ouvert radialement sur l'extérieur. Le porte-disques peut être un porte-disques interne ;
- Le logement peut être formé par un usinage interne de l'extrémité libre du bord cylindrique, de sorte à être ouvert radialement sur l'intérieur. Le porte-disques peut être un porte-disques externe. Le logement peut être alors délimité entre son diamètre intérieur D_{L1} et le diamètre extérieur D_{C2} de la cannelure. La paroi annulaire du logement peut être délimitée entre le diamètre intérieur D_{L1} du logement et le diamètre extérieur D_{C2} de la cannelure ;
- Le bord cylindrique peut comprendre des portions de raccordement liant l'intérieur de la cannelure à l'extrémité libre. Notamment, les portions peuvent être régulièrement réparties autour de l'axeX ;
- Les portions de raccordement peuvent s'étendre sous forme de rampes ;
- Lesdits portions de raccordement peuvent former par exemple des raidisseurs ;
- Les portions de raccordement peuvent s'étendre depuis le diamètre extérieur D_{C2} de la cannelure ;
- Les portions de raccordement peuvent relier l'intérieur des gorges de la cannelure à la périphérie externe de l'extrémité libre. Autrement dit, elles peuvent relier le diamètre extérieur D_{C2} de la cannelure à l'extrémité libre ;
- Par exemple, les portions de raccordement peuvent être de formes courbées avec un angle rentrant de type congés. En variante, les portions de raccordement peuvent être de formes courbées avec un angle fuyant ;
- Le porte-disques peut comprendre une alternance de portions de raccordement et de segments de liaison ;
- Les segments de liaison peuvent être formés dans le prolongement du bord cylindrique ;
- Les segments de liaison peuvent s'étendre axialement selon le diamètre extérieur D_{B2} du bord cylindrique;

L'invention propose aussi, selon un troisième aspect, un sous-ensemble assemblé pour système de transmission de couple, comprenant :
- un porte-disques selon l'une quelconque des caractéristiques du deuxième aspect,
- un élément d'entrainement, destiné à être lié en rotation à un arbre menant ou mené,

ledit élément d'entrainement étant logé dans le logement de l'extrémité libre du bord cylindrique,
ledit porte-disques et ledit élément d'entrainement étant assemblés bout à bout par soudure laser.

L'assemblage du sous-ensemble assemblé est simplifiée. Grâce à ces caractéristiques, l'encombrement dû à l'assemblage par soudure est limité au niveau de l'extrémité libre du bord cylindrique. Ce sous-ensemble est compact radialement Le poids est aussi réduit.

Selon ce troisième aspect, la soudure peut être localisée radialement à l'intérieur de l'extrémité libre du bord cylindrique. L'avantage de réduire son encombrement étant donné qu'on localise la soudure au plus près de l'extrémité libre. De préférence, la soudure de fixation peut être localisé à l'intérieur du logement

A titre d'exemple, la soudure peut être disposé en regard de la cannelure interne, plus précisément en regard des gorges de la cannelure interne.

Egalement selon ce troisième aspect, l'élément d'entrainement peut être un support d'entrée de couple ou un support de sortie de couple. Notamment, la portée cylindrique du logement peut être de forme complémentaire à celle de la périphérie externe de l'élément d'entrainement

L'invention propose aussi, selon un quatrième aspect, un procédé d'assemblage d'un élément d'entrainement, avec ledit porte-disque tel que décrit précédemment, comprenant au moins les étapes suivantes :
1) fournir un élément d'entrainement, de l'extrémité périphérique est adaptée à coopérer avec l'extrémité libre du bord cylindrique ;
2) mettre en appui l'élément d'entrainement sur l'extrémité libre, de telle sorte que l'élément d'entrainement soit logé dans le logement de l'extrémité libre du bord cylindrique ;
3) fixer bout à bout l'élément d'entrainement et l'extrémité libre du bord cylindrique par soudure, de préférence par soudure laser ;

Un tel procédé d'assemblage peut réaliser ledit sous-ensemble assemblé selon le troisième aspect.

Selon ce quatrième aspect, la soudure peut être localisée radialement à l'intérieur de l'extrémité libre du bord cylindrique. L'avantage de réduire son encombrement étant donné qu'on localise la soudure au plus près de l'extrémité libre. De préférence, ladite soudure de fixation peut être localisé à l'intérieur du logement.

A titre d'exemple, la soudure peut être disposé en regard de la cannelure interne, plus précisément en regard des gorges de la cannelure interne.

Egalement selon ce quatrième aspect, l'élément d'entrainement peut être un support d'entrée de couple ou un support de sortie de couple. Notamment, la portée cylindrique du logement peut être de forme complémentaire à celle de la périphérie externe de l'élément d'entrainement.

L'invention a également pour objet, selon un cinquième aspect, un système d'embrayage comprenant au moins un embrayage de type multidisques, commandés pour accoupler sélectivement un arbre menant à au moins un arbre mené, caractérisé en ce qu'il comprend un porte-disques reprenant tout ou partie des caractéristiques mentionnées précédemment

Selon ce cinquième aspect, le système d'embrayage peut être un simple embrayage, un embrayage de coupure, un double embrayage ou un triple embrayage.

De préférence, le système d'embrayage, en particulier le ou les embrayages, peuvent être de type humide.

Selon ce cinquième aspect, le système d'embrayage peut comprendre en outre un élément d'entrainement lié à l'arbre menant, ledit élément d'entrainement et ledit porte-disques assemblés bout à bout par soudure laser.

Selon ce cinquième aspect, ledit porte-disques peut être un moyen d'entrée de couple, connecté à l'arbre menant du système d'embrayage. En variante, ledit porte-disques peut être un moyen de sorte de couple, connecté à un arbre mené du système d'embrayage. En particulier, le système d'embrayage peut comprendre un sous-ensemble assemblé selon le troisième et/ou quatrième aspect

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une coupe axiale d'un système de transmission comprenant un tel porte-disques, selon un premier mode de réalisation de l'invention ;
- [Fig. 2] est une coupe axiale du porte-disques, selon le premier mode illustré à [Fig. 1] ;
- [Fig. 3] est une vue détaillée en coupe axiale du porte-disques, selon le premier mode illustré à [Fig. 1] ;
- [Fig. 4] est une vue en perspective du porte-disques, selon le premier mode de réalisation illustré à [Fig. 1] ;
- [Fig. 5] est une vue détaillée en perspective de l'intérieur du porte-disques, selon le premier mode illustré à [Fig. 1] ;
- [Fig. 6] est une vue détaillée en perspective de l'extérieur du porte-disques, selon le premier mode de la [Fig. 1] ;
- [Fig. 7], [Fig. 8], [Fig. 9], [Fig. 10] et [Fig. 11] décrivent un procédé de fabrication d'un porte-disque selon l'invention ;

Par « engin de mobilité », on entend les véhicules automobiles, les véhicules passagers, mais aussi les véhicules industriels, notamment les poids lourds, les véhicules de transport en commun ou les véhicules agricoles, mais également tout engin de transport permettant de faire passer d'un point à un autre un être vivant et/ou un objet.

Sauf indication contraire : « axialement » signifie « parallèlement à l'axe X de rotation du porte-disques ou du mécanisme d'embrayage » ; « radialement » signifie « selon un axe transversal coupant l'axe de rotation du porte-disques ou du mécanisme d'embrayage » ; « angulairement » ou « circonférentiellement » signifient « autour de l'axe X de rotation du porte-disques ou du mécanisme d'embrayage » ;

On utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

On entend par « cannelure interne » une série de dents internes s'étendant en direction de l'axe X, et délimitant entre elles des gorges externes. Les dents ou enfoncements sont réalisés depuis la périphérie externe de la tôle.

A l'inverse, on entend par « cannelure externe » une série de dents externes s'étendant en direction opposée à l'axe X, délimitant entre elles des gorges internes. Les dents ou enfoncements sont réalisés depuis la périphérie interne de la tôle.

Selon l'étape du procédé, les épaisseurs E_{P1}, E_{P2}, E_{P3}, E_{P3}' et la profondeur dp peuvent être mesurées soit selon l'axe X de rotation, soit selon la direction radiale, selon leur manipulation lors de la fabrication par rapport à l'axe X.

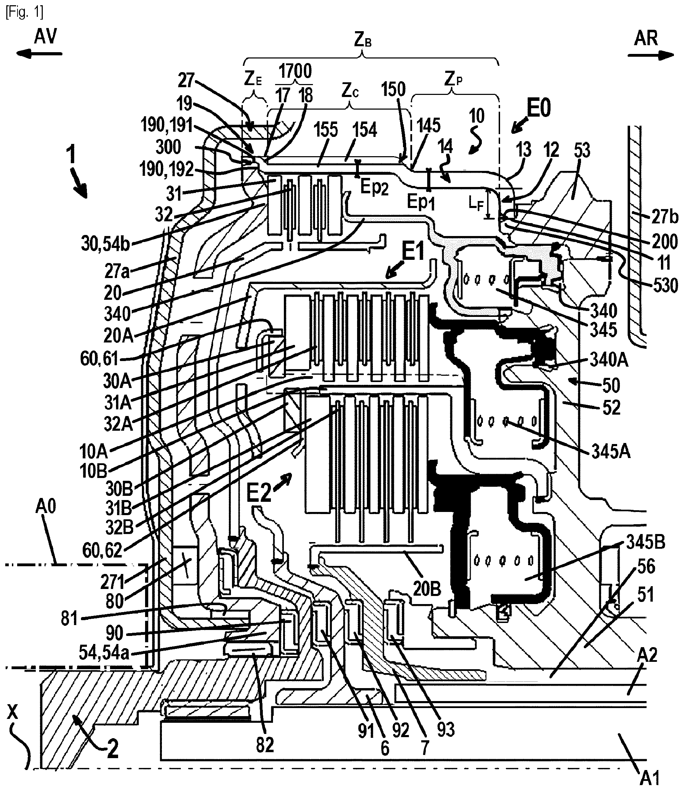

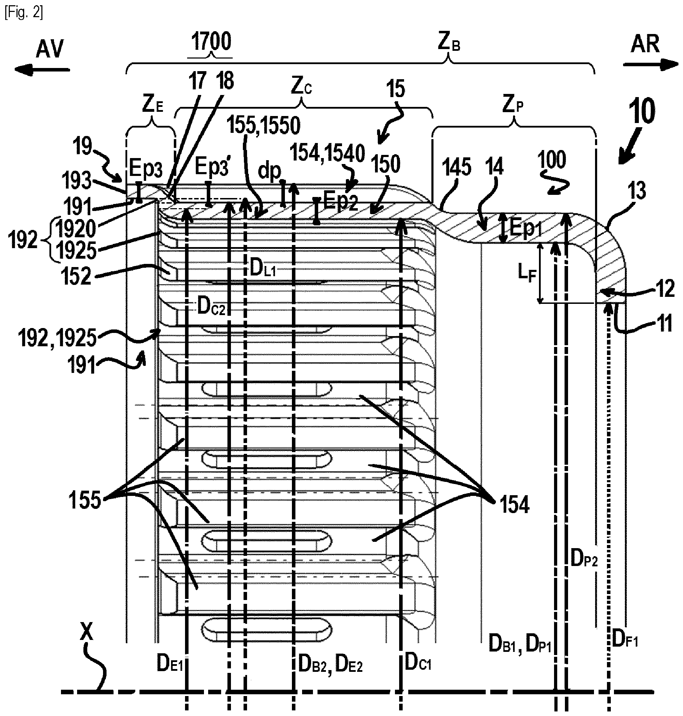

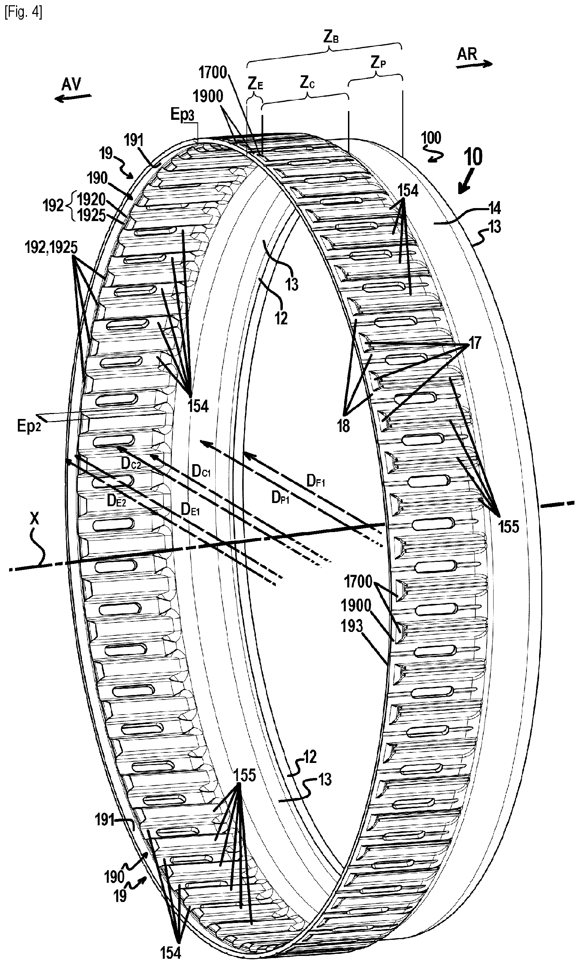

On a illustré sur les FIGURES 1 à 11 un premier mode de réalisation de l'invention. La [Fig. 1] illustre en coupe axiale un système de transmission de couple, nommé par la suite le dispositif 1, comprenant un tel porte-disques 10.

En relation avec la FIGURE 1, on observe un tel dispositif 1 de transmission de couple comprenant :
- un élément d'entrée de couple 2 en rotation autour d'un axe X, apte à être couplé en rotation à un vilebrequin d'un moteur thermique (non illustré mais situé à l'avant AV du dispositif 1 de transmission de couple) ;
- un premier élément de sortie de couple 6, apte à être couplé en rotation à un premier arbre d'entrée d'une boite de vitesses (non illustré mais situé à l'arrière ARdu dispositif 1 de transmission de couple) ;
- un deuxième élément de sortie de couple 7, apte à être couplé en rotation à un deuxième arbre d'entrée d'une boite de vitesses (non illustré) ; et
- un moyeu d'alimentation 50 fluidique, notamment d'huile.

Dans l'exemple illustré, le premier élément de sortie 6 est disposé en parallèle du deuxième élément de sortie 7 au sens de la transmission de couple. Chacun de ces éléments tourne autour d'un axe X de rotation du dispositif 1.

Les premiers et deuxièmes éléments de sortie 6, 7 comprennent respectivement un premier et un deuxième voile solidaire en rotation d'un premier et deuxième moyeu. Les premiers et deuxièmes moyeux comprennent des interfaces de sortie dont la périphérie interne est cannelée et apte à coopérer, respectivement avec un premier et un deuxième arbre de boite de vitesses.

Un dispositif d'amortisseur de torsion (non illustré) peut être positionné entre le vilebrequin du moteur thermique et l'élément d'entrée de couple 2. Le moyeu d'alimentation 50 d'huile est relié sélectivement à l'élément d'entrée de couple 2 par un embrayage d'entrée E0, au premier élément de sortie de couple 6 par un premier embrayage de sortie E1 et au deuxième élément de sortie de couple 7 par un deuxième embrayage de sortie E2.

En relation avec la FIGURE 1, nous allons maintenant décrire un triple embrayage 3 pouvant être utilisé dans le cadre de la présente invention et comprenant un embrayage de coupure E0, un premier embrayage de sortie E1 et un deuxième embrayage de sortie E2.

L'embrayage d'entrée E0, nommé également « embrayage de coupure E0 », comprend en outre :
- un porte-disque 10 d'entrée de couple solidaire en rotation du premier élément d'entrée de couple 2,
- un porte-disque 20 de sortie de couple solidaire en rotation du moyeu d'alimentation 50 et
- un ensemble multidisque comprenant :
   - plusieurs disques 31 de friction, ici deux, solidaires en rotation du porte-disque d'entrée 10,
   - plusieurs plateaux 32 respectivement disposés de part et d'autre de chaque disque 31 de friction, solidaires en rotation du porte-disque de sortie 20 et des garnitures de friction disposées entre les plateaux 32 et un disque 31 de friction, fixées de chaque côté des disques 31 de friction.

Par ailleurs, l'embrayage d'entrée E0 décrit une position débrayée et une position embrayée dans laquelle lesdits plateaux et le disque de friction pincent les garnitures de friction de manière à transmettre un couple entre le porte-disque d'entrée et le porte-disque de sortie.

De manière analogue à l'embrayage d'entrée E0, le premier embrayage E1 de sortie et le deuxième embrayage E2 de sortie comprennent :
- un porte-disque d'entrée 10A, 10B solidaire en rotation du moyeu d'alimentation 50 ;
- un porte-disque de sortie 20A, 20B solidaire en rotation du premier élément de sortie 6 (pour l'embrayage E1) ou solidaire en rotation du deuxième élément de sortie 7 (pour l'embrayage E2) ; et
- un ensemble multidisque comprenant :
   - plusieurs disques 31A, 31B de friction, ici cinq disques 31A (pour l'embrayage E1) et quatre disques 31B (pour l'embrayage E2), solidaires en rotation du porte-disque de sortie 20A, 20B,
   - plusieurs plateaux 32A, 32B respectivement disposés de part et d'autre de chaque disque 31A, 31B de friction, solidaires en rotation du porte-disque d'entrée 10A, 10B et des garnitures de friction disposées entre les plateaux et un disque de friction, fixées de chaque côté des disques de friction.

Par ailleurs, les embrayages E1 et E2 de sortie décrivent une position débrayée et une position embrayée dans laquelle lesdits plateaux et le disque de friction pincent les garnitures de friction de manière à transmettre un couple entre le porte-disque d'entrée et le porte-disque de sortie. De manière com m une aux trois embrayages E0, E1 et E2, les garnitures peuvent être fixées sur les disques de friction, notamment par collage, rivetage ou surmoulage. En variante, les garnitures sont fixées sur les plateaux. De manière avantageuse, les portes-disques 10A, 10B d'entrées forment ici une seule et même pièce, monobloc, réalisée d'un seul tenant, tel qu'illustrée sur la FIGURE 1.

Chaque porte-disque 10, 10A, 10B, 20, 20A, 20B peut synchroniser en rotation l'ensemble des disques 31, 31A, 31B de friction ou l'ensemble des plateaux 32, 32A, 32B. Selon un aspect de l'invention, les plateaux 32, 32A, 32B peuvent être solidaires en rotation du porte-disque 10, 10A, 10B d'entrée et les disques 31, 31A, 31B de friction peuvent être solidaires du porte-disque 20, 20A, 20B de sortie. En variante, les plateaux peuvent être solidaires en rotation du porte-disque de sortie. Les disques peuvent être alors solidaires en rotation du porte-disque d'entrée.

Par ailleurs, les embrayages E0, E1, E2sont de type humide et comportent entre deux et sept disques de friction, de préférence quatre disques 31, 31A, 31B de friction. De tels embrayages multidisques permettent de limiter la hauteur radiale de limiter l'étendue axiale.

En particulier, les embrayages E1, E2 de sortie peuvent être agencés pour ne pas être simultanément dans la même configuration embrayée. En revanche, ils peuvent simultanément être configurés dans leur position débrayée.

Le dispositif 1 comprend en outre un carter de de boite de vitesses 27. Ce carter 27 est agencé pour envelopper au moins partiellement l'élément d'entrée de couple 2, le premier et deuxième élément de sortie de couple 6, 7, l'embrayage d'entrée E0 et les embrayages E1, E2 de sortie.

Par ailleurs, le carter 27 de boite de vitesses est composé d'une première paroi latérale 27a, d'une deuxième paroi latérale 27b et d'une portion axiale (non illustrée) reliant les deux parois latérales 27a, 27b.

Notamment, la première paroi latérale 27a est composée d'une paroi radiale 270 et à son extrémité interne d'une portion de cylindre 271 s'étendant axialement autour de l'axe X. La première paroi latérale 27a peut présenter une forme générale sensiblement en « L », la base du « L » étant située du côté de l'axe X de rotation.

Notamment, le carter 27 peut être fixé au moteur à combustion interne ou au moteur de la machine électrique par l'intermédiaire de moyens de fixation, par exemple de type vis ou rivet

Par ailleurs, le moyeu d'alimentation 50 alimente en huile l'embrayage d'entrée E0, le premier embrayage E1 de sortie et le deuxième embrayage E2 de sortie. Le moyeu d'alimentation 50 comprend en outre une portion cylindrique 51, un flasque 52 s'étendant radialement depuis la portion cylindrique, un couvercle 53 d'entrainement et un support 54 s'étendant radialement depuis le couvercle 53 d'entrainement en direction de l'élément d'entrée de couple 2.

Dans l'exemple considéré, le couvercle 53 d'entrainement comprend une zone de connexion électrique 65 relié à une machine électrique tournante de sorte que l'axe de rotation de la machine électrique soit décalé de l'axe X de rotation du dispositif 1 de transmission de couple. Par ailleurs, la machine électrique peut être une machine synchrone à aimants permanents. La machine électrique est ainsi reliée sélectivement à l'élément d'entrée de couple 2 par l'embrayage d'entrée E0, au premier élément de sortie de couple 6 par le premier embrayage E1 de sortie et au deuxième élément de sortie de couple 7 par le deuxième embrayage E2 de sortie.

Dans l'exemple considéré, le moyeu d'alimentation 50 comprend en outre :
- une première cavité annulaire disposée sur le côté du flasque et agencé pour recevoir un piston d'actionnement du premier embrayage de sortie E1,
- une deuxième cavité annulaire disposé du même côté du lasque que la première cavité annulaire et agencé pour recevoir un piston d'actionnement du deuxième embrayage de sortie E2 ; et
- une troisième cavité annulaire disposé radialement au-delà des deux autres cavités annulaires et agencée pour recevoir un piston d'actionnement de l'embrayage d'entrée E0.

Le moyeu comprend en outre un canal d'alimentation d'huile 56 traversant la portion cylindrique 51 et le lasque 52 et débouchant dans l'une des cavités annulaires. Le canal d'alimentation d'huile 56 peut être réalisé par perçage de conduites successives au sein du moyeu d'alimentation d'huile, lesdites conduites étant débouchantes les unes dans les autres et agencées pour alimenter en fluide sous pression la chambre de commande des embrayages. Le tuide peut être de l'huile, par exemple de l'huile de boîte de vitesses.

Par ailleurs, le moyeu 50 est couplé en rotation à l'élément d'entrée de couple 2. Lorsque l'élément d'entrée de couple 2 est couplé à un arbre menant A0 entraîné en rotation par le vilebrequin d'un moteur, tel que décrit précédemment et que l'embrayage d'entrée E0 est fermé, alors le moyeu principal 50 est animé d'un mouvement de rotation analogue à celui de l'arbre moteur. Sur la FIGURE 1, l'embrayage d'entrée E0, le premier embrayage E1 de sortie et le deuxième embrayage E2 de sortie sont empilés et alignés radialement, c'est-à-dire qu'il existe un axe fictif orthogonal à l'axe de rotation X qui passe par les trois embrayages.

Par ailleurs, l'embrayage d'entrée E0 se trouve à l'extérieur par rapport au deux embrayages E1, E2 de sortie. Le deuxième embrayage E2 de sortie est disposé à l'intérieur par rapport au premier embrayage E1 de sortie.

De préférence, l'embrayage d'entrée E0, le premier embrayage E1 et le deuxième embrayage E2 de sortie (ci-après « les embrayages ») sont à l'état ouvert encore dit « normalement ouvert », et sont actionnés sélectivement en fonctionnement par un dispositif de commande (non illustré) pour passer de l'état ouvert à l'état fermé.

Les embrayages E0, E1, E2 sont chacun commandés par un système d'actionnement 34, 34A, 34B agencé pour pouvoir configurer les embrayages dans une configuration quelconque comprise entre la configuration embrayée et la coniguration débrayée. Pour commander sélectivement le changement d'état des embrayages, le dispositif de commande gère l'alimentation en huile. Un tel dispositif de commande est raccordé au moyeu d'alimentation d'huile 50 qui comprend le réseau de passage de fluide 56.

A chaque embrayage E0, E1, E2 est associé un système d'actionnement 34, 34A, 34B. Chaque système d'actionnement 34, 34A, 34B comprend en outre :
- une chambre de pression agencée pour recevoir un fluide pressurisé ;
- un piston 340, 340A, 340B mobile axialement à l'intérieur de la chambre de pression ; et
- une chambre d'équilibrage située à l'opposé de la chambre de pression par rapport au piston 340, 340A, 340B.

Chaque système d'actionnement 34, 34A, 34B comprend en outre un élément de rappel élastique 345, 345A, 345B, agencé pour générer un effort axial s'opposant au déplacement du piston 340, 340A, 340B correspondant pour embrayer l'embrayage E0, E1, E2 correspondant. Ceci permet de rappeler automatiquement le piston en position débrayée, correspondant à un état ouvert de l'embrayage. Dans cette position, le piston libère axialement l'ensemble multidisque correspondant qui ne transmet alors plus de couple en direction du premier arbre mené A1 ou du deuxième arbre mené A2 d'une boite de vitesses (nommés aussi arbres d'entrée d'une boite de vitesse).

Le piston 340, 340A, 340B d'actionnement de chaque embrayage peut être contrôlé par un capteur interne de position venant contrôler l'embrayage ou par mesurede la pression hydraulique lors de la fermeture de l'embrayage ou par mesure du volume de fluide injecté ou par mesure d'une grandeur de déplacement lors de la fermeture de l'embrayage. Chaque piston est disposé axialement entre une chambre de pression et une chambre d'équilibrage.

Par ailleurs, les pistons 340, 340A, 340B prennent la forme d'une tôle ondulée et sont incurvés axialement vers l'avant AV ou vers l'arrière AR. Des appuis extérieurs s'étendent parallèlement à l'axe X longitudinal. Leur appui extérieur s'étend axialement, ici vers l'avant AV, pour presser l'ensemble multidisque contre un moyen de réaction 30, 30A, 30B associé de l'embrayage E0, E1, E2 correspondant.

A titre d'exemple non limitatif, les pistons 340, 340A, 340B peuvent être obtenus par emboutissage.

Dans l'exemple considéré, le moyen de réaction 30 de l'embrayage d'entrée E0 est formé sur le support 54, ici au niveau du flasque 54a. Ces derniers forment une seule et même pièce monobloc, s'étendant circonféntiellement de manière continue autour de l'axe X. Par ailleurs, les moyens de réaction des embrayages E1, E2de sortie sont formés d'anneaux d'arrêt axial 30A, 30B élastique, de forme fendue. Ces derniers sont montés chacun en partie au fond de gorge réalisée dans le porte-disque 10, 10A, 10B d'entrée correspondant

De préférence, un organe de retenue 60 de type rondelle d'arrêt en tôle d'acier, s'étend radialement entre le premier embrayage et le deuxième embrayage, de sorte à être inséré et/ou à traverser au moins en partie dans les portes-disques 10A, 10B d'entrée. Cet organe de retenue 60, ici en forme de S, monobloc et rigide, retient les anneaux d'arrêt axial 34A, 34B, en étant monté après ces derniers, pour empêcher qu'ils ne s'échappent de leur gorge. A titre d'exemple, l'organe de retenu 60 comprend une partie centrale annulaire 61 et une partie périphérique annulaire 62, sous forme de bras de liaison disposés radialement à l'extérieur de la partie centrale annulaire 61, pour retenir par exemple l'anneau d'arrêt axial 34A du premier embrayage E1.

Par ailleurs, les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment La chambre de pression qui génère l'efbrt du piston est associée à une chambre d'équilibrage agencée pour recevoir un certain volume de fluide hydraulique. Le fluide, du type de lubrification ou de refroidissement est avantageusement acheminé par l'intermédiaire de conduits de circulation fluidiques basse pression (non représentées sur le plan de coupe).

A chaque système d'actionnement 34, 34A, 34B est associé un élément de rappel élastique 345, 345A, 345B. L'élément de rappel élastique est une rondelle Belleville ou composé de ressorts hélicoïdaux tels que la FIGURE 1.

Par ailleurs, le support 54 s'étend radialement en-deçà de la première paroi latérale 27a du carter. Ainsi, l'extrémité interne du support 54 est plus proche de l'axe X que l'extrémité interne de la première paroi latérale 27a du carter. Le porte-disque 10 d'entrée de l'embrayage d'entrée E0 est ici lié en rotation à l'arbre menant A0, par l'intermédiaire du support 54. Le support 54 est composé d'une portion de cylindre interne 54a et d'un flasque 54b.

Dans l'exemple considéré, la portion de cylindre 54a s'étendant axialement à l'intérieur et à l'extérieur de la portion de cylindre 271 de la première paroi latérale 27a. Le flasque 54b est connecté en rotation au porte-disque 10 d'entrée, fixé ensemble par soudure, de préférence bout à bout par soudure de type laser.

Par ailleurs, le porte-disque 10 d'entrée entoure le support 54, de sorte que ce dernier est logé à l'intérieur du porte-disque 10 d'entrée. En variante, la portion de cylindre 54a et le flasque 54b peuvent être deux pièces solidaires en rotation. Dans l'exemple considéré, il s'agit d'une seule et même pièce.

Nous allons maintenant décrire plus en détails le porte-disque 10 d'entrée et d'axe X de rotation.

Dans l'exemple considéré, ce dernier est un porte-disques externe. Le porte-disque 10 d'entrée de l'embrayage d'entrée E0 peut présenter une forme générale sensiblement en « L », la base du « L » étant située du côté le plus éloigné de l'axe X de rotation.

Par ailleurs, le porte-disque 10 d'entrée comprend :
- un fond 12, de forme cylindrique d'axe X, formé ici au plus près de l'axe X ;
- un bord cylindrique 15 externe, de forme de révolution autour de l'axe X ; et
- un logement 190 interne, formé dans le bord cylindrique 15 pour recevoir le support 54 dont le flasque 54b ;

Le fond 12 et le bord cylindrique 15 sont formés par découpage et emboutissage d'une seule tôle. Dans l'exemple considéré, le fond 12 et le bord cylindrique 15 sont reliés directement l'un à l'autre.

Le fond 12 du porte-disque 10 s'étend radialement à l'intérieur du bord cylindrique 15. Le fond 12 peut définir l'interface de connexion du porte-disque au moyeu d'alimentation 50, en étant de forme complémentaire à ce dernier.

Le bord cylindrique 15 s'étend radialement entre un diamètre intérieur D_{B1} et un diamètre extérieur D_{B2}. Le diamètre intérieur D_{B1} est inférieur au diamètre extérieur D_{B2}.

Par ailleurs, le fond 12 s'étend radialement depuis un diamètre intérieur D_{F1} jusqu'à un diamètre intérieur D_{B1} du bord cylindrique 15, le diamètre D_{B1} étant celui au niveau duquel sont formés le fond 12 et le bord cylindrique 15. Une élongation radiale L_{F} du fond 12 est définie entre les diamètres D_{F1} et D_{B1}.

Par ailleurs, le fond 12 comprend un alésage 11 dont la périphérie interne définit un diamètre intérieur D_{B1} selon l'axe X. L'alésage 11 reçoit en partie le couvercle 53 d'entrainement et venir en appui sur ce dernier. La périphérie interne du fond 12 définit l'extrémité interne du porte-disque qui est la plus proche de l'axe X. De ce fait, le fond 12 est monté en appui axial sur le moyeu d'alimentation 50 d'huile, et de préférence centré sur ce dernier. Le fond 12 du porte-disques est centré sur un rebord d'appui 530 du couvercle 53 d'entrainement, ici une excroissance usinée.

Dans l'exemple considéré, le fond 12 s'étend de manière continue sur 360 degrés. Le fond 12 forme ici une paroi latérale, d'élongation radiale L_{F}, qui s'étend au droit de l'axe X. Cette paroi latérale peut définir ladite interface de connexion, sous la forme d'une zone plane d'appui.

La dimension radiale du fond 12 peut être sensiblement égale à celle du couvercle 53 d'entrainement. Le porte-disque 10 présente un faible encombrement radial et un fort encombrement axial, suivant les dimensions (radiale et diamètre) des pièces avoisinantes du dispositif 1 avec lesquels il coopère, ici suivant celles du couvercle 53 et du support 54. Ce porte-disque peut être compactradialement tout en présentant une élongation axiale satisfaisante.

Dans l'exemple considéré, le fond 12 et le couvercle 53 d'entrainement sont assemblés au moyen d'au moins une soudure 200. Tout type de soudure est possible, notamment par apport de matière, par friction ou soudure laser. La soudure peut être de type continue ou discontinue autour de l'axe X. En variante, ils peuvent être fixés ensemble par tout autre moyen d'assemblage, tel que par rivetage ou par liaison cannelée.

Le bord cylindrique 15 s'étend axialement depuis le fond 12, selon une longueur axiale disponible Z_{B}.

A titre d'exemple, l'élongation radiale L_{F} du fond est égale à 10% de la longueur axiale disponible Z_{B} du bord cylindrique. L'élongation radiale L_{F} du fond 12 peut être supérieure, notamment comprise entre 15% et 35% de la longueur axiale disponible Z_{B} du bord cylindrique.

Par ailleurs, le bord cylindrique 15 comprend une extension axiale sur laquelle est formée une cannelure 150 du porte-disque 10. La cannelure 150 est formée d'une alternance de dents 155 et de gorges 154 angulairement régulièrement réparties autour de l'axe X. Une gorge 154 est délimitée entre deux dents 155 adjacentes

Par ailleurs, la cannelure 150 reçoit les disques 31 de friction de l'ensemble multidisque de l'embrayage d'entrée E0. Dans l'exemple considéré, la cannelure 150 interne s'étend radialement entre un diamètre intérieur D_{C1} et un diamètre extérieur D_{C2}. Le diamètre intérieur D_{C1} de la cannelure 150 est définie sur la crête des dents 155 de la cannelure. Le diamètre extérieur D_{C2} de la cannelure 150 est définie sur le fond des gorges 154 de la cannelure.

Par ailleurs, la cannelure 150 est réalisée par formage à froid d'une des parties axiales du bord cylindrique 15, ici sur une zone intermédiaire dite « zone le de formage ». Elle se caractérise ici par une série d'enfoncements 1550.

En d'autres termes, seule cette zone le de formage parmi celles du bord cylindrique peut être déformée par formage à froid. Cette zone le de formage définie ainsi la zone de réalisation des enfoncements 1550.

Dans l'exemple considéré, la Z_{C} de formage est une zone centrale du bord cylindrique 1. Par « zone centrale », on peut entendre une zone s'étendant sur environ 35% à 95% de la longueur axiale disponible Z_{B} du bord cylindrique.

De tels enfoncements 1550, ici au nombre de cinquante-huit, s'étendent selon une profondeur dp, grâce à un outillage de formage à froid. Une série d'enfoncements 1550 est ainsi formée à froid depuis la périphérie externe 152 du bord cylindrique 15, grâce à un outillage de formage à froid.

On entend par « outillage de formage à froid » une série de rouleaux R profilés se déplaçant parallèlement à l'axe X. En déformant à froid le bord cylindrique 15 lors de leur passage, les rouleaux R profilés réalisent depuis l'extérieur la cannelure 150 interne. Notamment, ces enfoncements s'étendent en direction de l'axe X, de sorte à former des dents 155 internes, ici au nombre de cinquante-huit.

Par ailleurs, la profondeur dp est définie entre les diamètres intérieur D_{C1} et extérieur D_{C2} de la cannelure 150. Dans l'exemple considéré, la profondeur dp de l'enfoncement 1550 est supérieure à l'épaisseur Ep3 finale de l'extrémité libre 19 du bord cylindrique 15. De tels enfoncements 1550 sont répartis angulairement autour de l'axe X, selon une répartition angulaire. Ces enfoncements 1550 sont espacés les uns des autres, de sorte à délimiter entre eux des espaces non enfoncés dit espaces 1540.

Dans l'exemple considéré, la cannelure 150 comprend une alternance d'espaces 1540 et d'enfoncements 1550, ici au nombre de cinquante-huit chacun, selon une répartition angulairement régulière. Ainsi, un espace 1540, qui est délimité entre deux enfoncements 1550 immédiatement adjacents, délimite une des gorges 154 de la cannelure 150 interne. En particulier, les espaces 1540 définissent le fond des gorges 154 de la cannelure 150 interne.

Par ailleurs, la zone le de formage des enfoncements peut être la partie médiane ou zone centrale du bord cylindrique 15. A titre d'exemple, la zone le de formage s'étend ici axialement :
- sur environ 50% de la longueur séparant le fond 12 de l'extrémité libre 19 et située entre ces derniers ; et
- sur environ 99% de la longueur séparant le fond 12 de la portion intermédiaire 14 et située entre ces derniers ;

Par ailleurs, le bord cylindrique 15 peut présenter en section, selon un plan passant par l'axe X, une succession de portions étagées. Dans l'exemple considéré, le bord cylindrique 15 comprend trois extensions axiales :
- une première extension axiale d'épaisseur Ep1, dite portion intermédiaire 14, reliée au fond 12 du porte-disque ;
- une deuxième extension axiale d'épaisseur Ep2, formant la cannelure 150 reliée à la portion intermédiaire 14 ;
- une troisième extension axiale d'épaisseur Ep3, formant l'extrémité libre 19 qui est reliée à la cannelure 150 ;

Ainsi, le bord cylindrique 15 peut être formé successivement de la portion intermédiaire 14, la cannelure 150 et de l'extrémité libre (dans cet ordre) selon l'axe X. Par ailleurs, la portion intermédiaire 14, la cannelure 150 et l'extrémité libre 19 sont décalées radialement les unes des autres. La cannelure 150 s'étend radialement à l'extérieur de la portion intermédiaire 14. En particulier, les dents 155 sont espacés axialement du fond 12 du porte-disques.

En variante, le porte-disque 10 peut être un porte-disques interne, de sorte que sa cannelure puisse être de forme externe. Alternativement ou en complément, le porte-disque 10 peut être un porte-disques de sortie de couple. La cannelure peut être située radialement au-dessus de l'extrémité libre, ou en dessous de la portion intermédiaire.

Par ailleurs, la portion intermédiaire 14 de forme cylindrique, s'étend radialement entre un diamètre intérieur D_{P1} et un diamètre extérieur D_{P2}, qui délimitent entre eux l'épaisseur Ep1 de la portion intermédiaire 12.

L'épaisseur Ep2 de la cannelure 150 est ici inférieure à l'épaisseur Ep1 de la portion intermédiaire 14.

En variante, elle peut être supérieure ou sensiblement égale à l'épaisseur Ep1 de la portion intermédiaire.

Par ailleurs, la portion intermédiaire 14 décale la cannelure 150 du fond 12, pour ménager un espace libre à l'intérieur du porte-disques, selon l'axe X. Dans l'exemple considéré, la portion intermédiaire 14 s'étend axialement depuis le fond 12 selon une zone Z_{P} axiale, de telle sorte à relier directement le fond 12 à la cannelure 150.

De ce fait la zone Z_{P} axiale de la portion intermédiaire 14 peut être dimensionnée pour recevoir au moins en partie un piston d'actionnement 340 de l'embrayage d'entrée E0. Alternativement ou en complément elle peut recevoir au moins en partie un élément de rappel élastique, agencé pour générer un effort axial s'opposant au déplacement dudit piston pour embrayer l'embrayage d'entrée E0.

Par ailleurs, l'extrémité libre 19 est formée en bout du bord cylindrique 15, plus précisément depuis le bout de la longueur axiale disponible Z_{B} du bord cylindrique.

Dans l'exemple considéré, l'extrémité libre 19 s'étend sous la forme d'une collerette continue.

L'extrémité libre 19 s'étend axialement selon une zone Z_{E} libre, et elle est axialement opposée à celle du fond 12. On entend par « zone Z_{E} libre » de l'extrémité libre 19, la périphérie du bord cylindrique 15 sur laquelle aucun rouleau R profilé ne s'est déplacé. De sorte qu'il n'y a aucun enfoncement résultant

L'extrémité libre 19 du bord cylindrique 15 s'étend de manière continue autour de l'axe X, sous la forme d'un cylindre de centre l'axe X. Cette zone Z_{E} libre est délimitée depuis la zone le de formage des enfoncements jusqu'au bout 193 libre. La dimension axiale de la zone Z_{E} est inférieure à celle de la zone le de formage.

La zone Zε libre de l'extrémité libre 19 est définie depuis la limite des enfoncements 1550. Par ailleurs, elle peut être définie par un profil d'extrémité des enfoncements 1550. On dimensionne la zone Z_{E} libre de l'extrémité libre 19 de sorte à ce qu'elle soit suffisante pour entourer la périphérie radialement externe du support 54, ici son flasque 54b.

Dans l'exemple considéré, la longueur axiale disponible Z_{B} du bord cylindrique est la somme des zones Z_{E}, Zc, Z_{P} respectivement de l'extrémité libre 19, de formage des enfoncements 1550 et de la portion intermédiaire 14.

La zone Zε libre peut s'étendre axialement sur 2% à 40% de la longueur axiale disponible Z_{B} du bord cylindrique. A titre d'exemple, la zone Z_{E} libre peut s'étendre axialement sur 9% de la longueur axiale disponible Z_{B} du bord cylindrique. Par ailleurs, la zone Z_{E} libre de l'extrémité libre 19 est ici égale à 9% de la zone le des enfoncements 1550. En variante, elle peut être égale à 17% de la zone le axiale des enfoncements 1550.

Par ailleurs, l'extrémité libre 19 est liée directement à la cannelure 150, en particulier, par un prolongement de matière 1700 en commun. Ce prolongement de matière 1700 commune est issue du bord cylindrique 15, plus précisément il est formé dans le prolongement du diamètre extérieur DB2 du bord cylindrique.

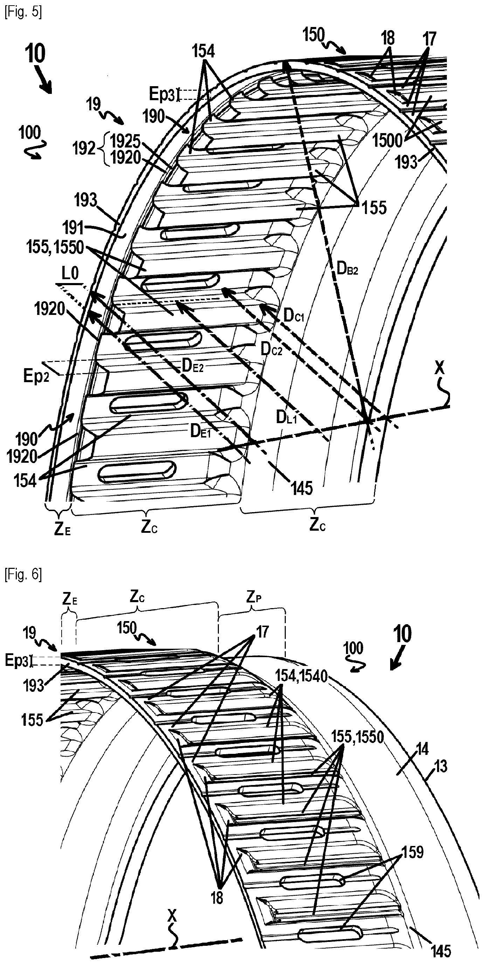

Ce prolongement de matière est uniformément contant entre les zones Z_{C} de formage et Z_{E} libre, tel qu'illustré sur la FIGURE 6 (lignes en pointillées).

On entend par « prolongement du diamètre extérieur DB2 », que l'extrémité libre 19 et le diamètre extérieur DB2 du bord cylindrique s'étendent la même distance par rapport à l'axe X, autrement dit sans décalage axial l'un par rapport à l'autre. L'extrémité libre 19 et le diamètre extérieur DB2 du bord cylindrique sont donc alignés axialement.

Les contours radialement externes des zones Z_{C} de formage et Z_{E} libre sont sensiblement constantes et alignées. Le porte-disques est alors compact axialement. Notamment le diamètre extérieur D_{B2} du bord cylindrique 15 est sensiblement constant depuis la zone le de formage jusqu'au bout 193 de l'extrémité libre 19. Ainsi, le diamètre extérieur D_{E2} de l'extrémité libre 19 est égale au diamètre extérieur D_{B2} du bord cylindrique.

Par ailleurs, un tel prolongement de matière 1700 définit par extension un prolongement axial 1900 de matière au niveau de la zone Z_{E} libre de l'extrémité libre. Notamment, ce prolongement axial 1900 de la zone Z_{E} libre, issu de la matière du bord cylindrique 15, sera par la suite retravaillée, mise en forme et rectiiée, en particulier par étapes de cintrage et/ou d'usinage, de sorte à former la forme finale de l'extrémité libre 19 adaptée à recevoir le support 54.

Par ailleurs, la forme du prolongement de matière 1700 commune est discontinue autour de l'axe X.

De ce fait le prolongement de matière 1700 comprend des premières portions discontinues, représentant la partie non enfoncée par les rouleaux. Autrement dit, celle des espaces 1540 délimités entre les enfoncements 1550.

Ces premières portions discontinues seront nommées par la suite des segments de liaison 17. A titre d'exemple, les segments de liaison 17 peuvent être délimités entre les dents 155 et ils s'étendent ici axialement selon le diamètre extérieur D_{B2} du bord cylindrique 15.

En particulier, le prolongement de matière 1700 comprend des secondes portions discontinues, représentant la partie partiellement enfoncée par les rouleaux. Autrement dit, l'extrémité des enfoncements 1550 ou dents 155.

Ces secondes portions discontinues seront nommées par la suite des portions de raccordement 18. Notamment, les portions de raccordement 18, de formes courbées, résultent au moins en partie de la forme du rouleau R au niveau duquel ce dernier s'est arrêter. Une portion de raccordement 18 résulte de l'arrêt du le déplacement dudit rouleau réalisant l'enfoncement correspondant. Les portions de raccordement 18 s'étendent sous forme de rampes. En particulier, chaque portion de raccordement 18 est formé dans un enfoncement 1550.

A titre d'exemple, les portions de raccordement 18 s'étendent depuis l'intérieur des gorges 145 jusqu'à la périphérie externe de l'extrémité libre 19. Dans l'exemple considéré, l'élongation de matière 1700 comprend une alternance de segments de liaison 17 et de portions de raccordement 18.

De manière avantageuse, les portions de raccordement 18 forment des raidisseurs, de telle sorte à lier fixement l'intérieur de la cannelure 150 au prolongement axiale 1900 de l'extrémité libre 150, sans détériorations.

En particulier, un tel prolongement de matière 1700 se développe depuis les espaces 1540 non enfoncées.

En d'autres termes, le prolongement axiale 1900 est issu de la matière des parties non enfoncées de l'élongation de matière 1700, de sorte à former la matière de l'extrémité libre 19. Dans l'exemple considéré, le prolongement axiale 1900 est formé en partie dans le prolongement de matière des segments de liaison 17. Pour rappel, aucune étape de formage par rouleau n'est réalisée sur le prolongement axiale 1900. Dès lors, les espaces 1540, les segments de liaison 17 et le prolongement axiale 1900 de l'extrémité libre 19 sont alignés axialement les uns par rapport aux autres, et ils forment ensemble le prolongement de matière dudit bord cylindrique 15.

En variante, l'extrémité libre 19 peut s'étendre radialement à l'extérieur des enfoncements 1550 ou dents 155. Dans une telle situation, l'extrémité libre 19 est décalée radialement des espaces 1540 non enfoncées.

De ce fait la cannelure 150, notamment les dents 155, sont décalées axialement et radialement de l'extrémité libre 19. De ce fait, la cannelure 150 est formée en retrait par rapport à l'extrémité libre 19 du bord cylindrique 15. En particulier, les dents 155, notamment leur extrémité, sont formées distinctement de l'extrémité libre 19.

En d'autres termes, l'extrémité libre 19 est décalée radialement des dents 155 de la cannelure 150. En particulier, les dents 155 s'étendent radialement entre l'extrémité libre 19 et l'alésage 11 dudit porte-disques 10.

Par ailleurs, l'extrémité libre 19 s'étend radialement entre un diamètre intérieur D_{E1} et un diamètre extérieur D_{E2}.

Notamment, les diamètres intérieur D_{E1} et extérieur D_{E2} de l'extrémité libre 19 sont liés entre eux par une face radiale, soit le bord 193 libre de l'extrémité libre 19. Ce bord 193 libre peut être avantageusement rectifier, notamment lors de l'étape de cintrage de l'extrémité libre 19.

Par ailleurs, la forme finale de l'extrémité libre 19 est formée en partie par les étapes de cintrage et d'usinage. Notamment les portions de raccordement 18 peuvent ensuite être rectifier, c'est-à-dire retravailler pour leur mise en forme finale, grâce à l'étape de cintrage de l'extrémité libre 19.

Notamment, les diamètres intérieur D_{E1} et extérieur D_{E2} de l'extrémité libre 19 délimitent entre eux une première épaisseur dite épaisseur initiale Ep3' de l'extrémité libre. A la fin de l'étape de formage à froid, l'épaisseur Ep3' initiale peut être égale à l'épaisseur Ep2. Puis durant l'étape de cintrage, l'épaisseur Ep3' initiale de l'extrémité libre est modifiée, rectiiée, en particulier réduite.

Par ailleurs, l'extrémité libre 19 comprend en outre un unique logement 190. Ce logement 190 est réalisé depuis l'extrémité libre 19 par retrait de matière, ici par usinage interne.

En variante non illustrée, le logement 190 peut être formé par un usinage externe de l'extrémité libre du bord cylindrique, de sorte à être ouvert radialement sur l'extérieur.

Par ailleurs, le logement 190 est ouvert radialement sur l'intérieur, de telle sorte à recevoir et centrer le support 54, ici au niveau de son flasque 54b. Dans l'exemple considéré, le logement 190 comprend :
- une portée cylindrique 191 interne du logement, issue de l'étape d'usinage de l'extrémité libre 19 ; et
- une surface d'appui axial 192 de forme discontinue autour de l'axe X, comprenant en outre :
   - une paroi annulaire 1920 usinée lors de l'étape d'usinage, ici de forme continue autour de l'axe X ; et
   - d'une série de portions d'appui internes, formées par l'extrémité 1925 des dents 155 de la cannelure ;

Notamment, la portée cylindrique 191 définit le fond du logement 190, de préférence de forme plan, pour centrer la périphérie radialement externe dudit flasque 54b. Une fois usinée, la portée cylindrique 191 du logement 190 définit par la mêmeoccasion le diamètre intérieur D_{E1} de l'extrémité libre 19.

Notamment, la paroi annulaire 1920 forme un des bords radiaux du logement 190. A titre d'exemple, la paroi annulaire 1920 définit ici à sa périphérie radialement interne un diamètre intérieur Du du logement 190.

On distingue ici les diamètre intérieurs D_{E1} et D_{L1}, respectivement de l'extrémité libre 19 et du logement 190. En d'autres termes, la surface d'appui axial 192 discontinue peut se définir comme toute portion du porte-disques 10 destinée à venir axialement en appui contre le support, 54. Autrement dit des portions d'appui axial espacées et réparties autour de l'axe X, qui forment ensemble ladite surface d'appui axial 192 discontinue.

Par ailleurs, la portée cylindrique 191 interne et la paroi annulaire 1920 sont formés par usinage de l'extrémité libre 19, ici par le retrait de matière dans l'épaisseur de l'extrémité libre.

Ainsi, l'extrémité libre 19 comprend après l'étape d'usinage une épaisseur réduite, par retrait de matière lors de l'usinage, qui définit l'épaisseur Ep3 finale de l'extrémité libre 19. L'épaisseur Ep3 finale est définie radialement entre les diamètres extérieur D_{E2} de l'extrémité libre et intérieur D_{L1} du logement. L'épaisseur Ep3 finale est inférieure à l'épaisseur Ep3 initiale de l'extrémité libre 19.

Dans l'exemple considéré, l'épaisseur Ep3 finale de l'extrémité libre 19 est inférieure à l'épaisseur Ep1 de la portion intermédiaire 14, et notamment à l'épaisseur Ep2 de la cannelure 150. Plus le retrait de matière est faible, et plus l'épaisseur Ep3 finale est importante, ce qui réduit les risques futurs de détérioration. Le retrait de matière réalisé par usinage peut être défini par soustraction des épaisseurs initiale et finale « Ep3'- Ep3 ».

Par ailleurs, les extrémités 1925 des dents dits portions d'appui, ici au nombre de cinquante-huit, sont définies sur les extrémités avant AV des dents 155, autrement dit sur les extrémités avant AV des enfoncements 1550. Ces derniers forment ainsi en partie de manière discontinue la surface d'appui axial 192 discontinue du logement 190. Les portions d'appui 1925 sont répartis angulairement autour de l'axe X, selon une répartition régulière, ici équidistante.

En d'autres termes, l'extrémité des enfoncements 1550 forment par extension une partie de la surface d'appui axial 192 discontinue du logement 190. De ce fait, les portions d'appui résultent de l'étape de formage à froid de la cannelure par enfoncements 1550. Elles ne sont pas réalisées par usinage de l'extrémité libre.

Dans l'exemple considéré, la surface d'appui axial 192 discontinue est issue des étapes d'usinage et du formage à froid de la cannelure 150. Dès lors, la réalisation du logement 190 permet de réduire la perte de matière et la surépaisseur initiale de l'extrémité libre 19. Le poids global du porte-disques 10 est également réduit.

De préférence, le diamètre intérieur Du du logement 190 est supérieur au diamètre extérieur D_{C2} de la cannelure 150. Dès lors, les dents 155 sont radialement en retrait par rapport au diamètre intérieur D_{E1} de l'extrémité libre 19. Les dents 155 sont formées distinctement de l'extrémité libre 190 et du retrait de matière résultant du logement 190.

De ce fait, les dents 155 sont espacées radialement du logement 190. En les distinguant, on évite la détérioration de l'extrémité libre, lors du formage à froid, et celle des dents, lors de l'usinage de l'extrémité libre.

Par ailleurs, l'extrémité libre 19 et le flasque 54b sont fixés ensemble bout à bout par une soudure 300, de préférence par soudure laser. La soudure 300 s'étend ici axialement à l'intérieur du logement 190.

A titre d'exemple, la soudure 300 peut être disposée axialement en regard de la cannelure 150. La soudure 300 est ici alignée selon l'axe X avec les gorges 154 de la cannelure. Cette position de soudure 300 est alors optimale pour fixer le support 54 sur le porte-disques 10, sans risque de détériorations précoces.

Par ailleurs, l'extrémité libre 19 lie les extrémités de la cannelure 150, au niveau de la paroi annulaire 1920 du logement 19. A titre d'exemple, la paroi annulaire 1920 relie les dents 155 de la cannelure 150 entre elles, et également avec le reste de l'extrémité libre. Dans l'exemple considéré, le diamètre intérieur Du du logement 190 est supérieur au diamètre intérieur D_{C1} de la cannelure 150. La paroi annulaire 1920 est délimitée radialement entre le diamètre intérieur Du du logement et le diamètre extérieur D_{C2} de la cannelure.

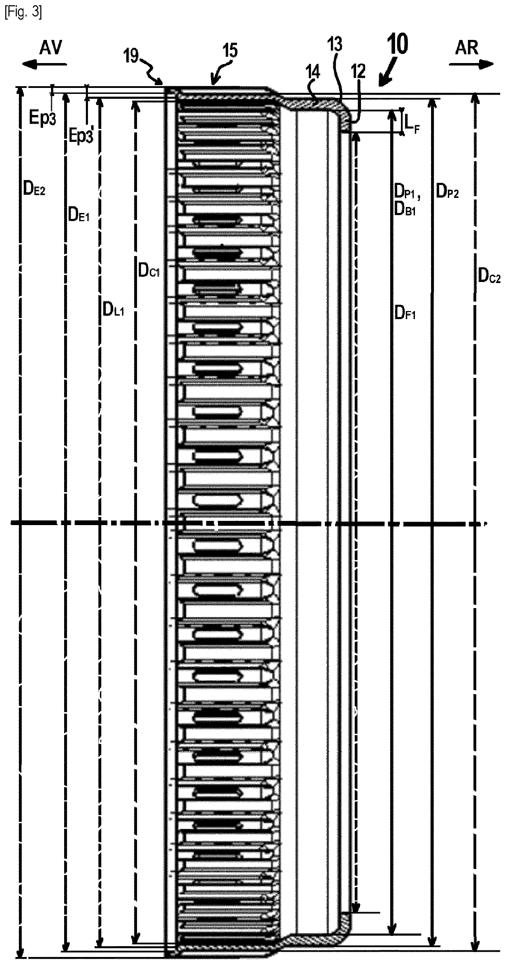

La FIGURE 3 illustre en comparaison les diamètres, épaisseurs et/ou dimensions résultantes, selon l'axe X.

A titre indicatif, les dimensions résultantes des étapes du procédé de fabrication sont les suivantes :
- Le diamètre extérieur D_{B2} du bord cylindrique 15 est égale au diamètre extérieur D_{E2} de l'extrémité libre 19. Ceci est dû pour rappel au prolongement de matière selon l'axe X, de la cannelure 150 jusqu'à l'extrémité libre 19.
- Le diamètre intérieur D_{B1} du bord cylindrique 15 est supérieur au diamètre extérieur D_{C2} de la cannelure 150 ;
- Le diamètre extérieur D_{C2} de la cannelure 150 est supérieur au diamètre intérieur Du du logement 190 ;
- Le diamètre intérieur D_{C1} de la cannelure est supérieur au diamètre extérieur D_{P2} de la portion intermédiaire 14 ;
- Le diamètre intérieur Du du logement 190 est supérieur au diamètre extérieur D_{P2} de la portion intermédiaire 14 ;
- Le diamètre intérieur D_{P1} de la portion intermédiaire 14 est supérieur au diamètre intérieur D_{F1} du fond 12 ;

En variante non illustrée, le diamètre intérieur D_{B1} du bord cylindrique 15 peut être inférieur au diamètre extérieur D_{E2} de l'extrémité libre 19, de sorte que l'extrémité s'étend radialement à l'extérieur du bord cylindrique.

Dans une telle situation, l'extrémité libre 19 peut être rectifier et étendue lors de l'étape de cintrage, pour se développer en partie radialement à l'extérieur du bord cylindrique 15.

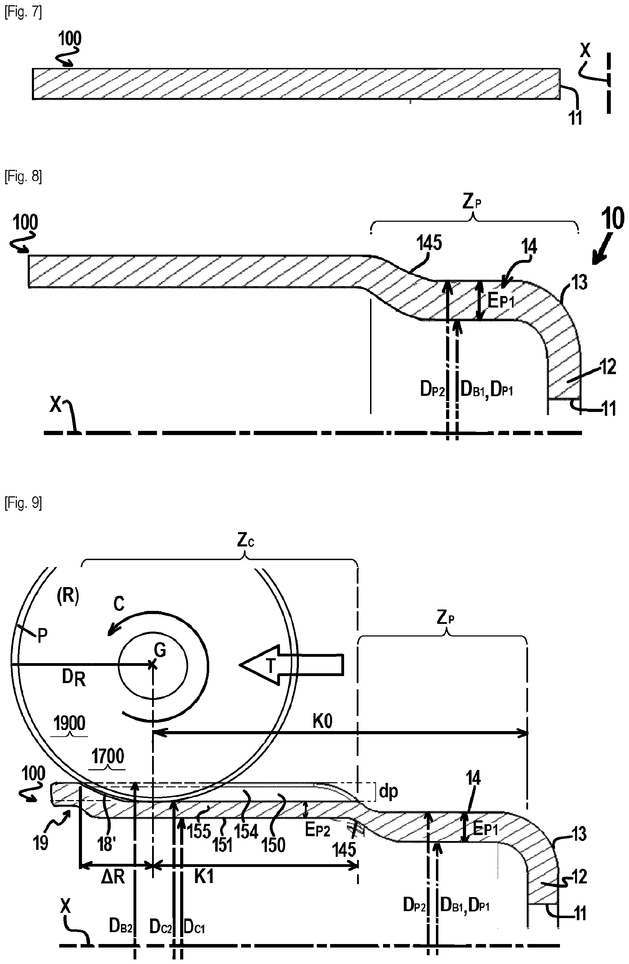

On va maintenant décrire la fabrication du porte-disque 10 du premier mode de réalisation de l'invention, comme illustré sur les FIGURES 7 à 11. La fabrication comporte, entre autre, les étapes suivantes :

Selon une première étape (illustrée en FIGURE 7), on fournit une seule tôle 100, d'axe X de révolution. On découpe alors la tôle 100, de préférence en son centre d'axe X, de telle sorte à former notamment un alésage 11. Dès lors, le découpage est réalisé selon un contour fermé circulaire, de centre et d'axe X.

Selon une deuxième étape (illustrée en FIGURE 8), on emboutit cette tôle 100 en réalisant au moins deux portions embouties, autrement dit un fond 12 et un bord cylindrique 15, radialement distinctes l'un de l'autre.

A titre d'exemple, on réalise la deuxième étape de sorte que :
- une première portion emboutie, s'étendant de manière perpendiculaire à l'axe X, définit ledit fond 12, notamment sa forme finale du fond dudit porte-disques 10. Aucune autre étape supplémentaire n'est nécessaire pour le fond;
- une autre portion emboutie, s'étendant sensiblement le long de l'axe X, définit le bord cylindrique 15, en particulier sa la forme initiale, dont les périphéries radialement interne et externe s'étendent le long de l'axe X ;

Dès lors, le bord cylindrique 15 est lié directement au fond 12, notamment par un rayon de courbure 13, nommé également congé de raccordement, qui résulte de l'étape d'emboutissage distinguant lesdites deux portions. Notamment la forme initiale du bord cylindrique 15 définit un flanc du bord cylindrique. Le flanc du bord cylindrique s'étend initialement sous la forme d'une coupelle ou d'un cylindre continuellement circulaire. Néanmoins, ce flanc est destiné à être déformé, notamment enfoncé par enfoncements 1550, lors du formage à froid.

De manière détaillée, ce flanc du bord cylindrique 15 peut être délimité par au moins deux zones axiales. Dans l'exemple considéré, le flanc du bord cylindrique est défini en trois zones Z_{P}, Z_{C}, Z_{E} axiales. De manière détaillée, ce flanc du bord cylindrique 15 peut être défini par au moins deux parties embouties.

On emboutit ici la tôle 100 en trois portions radialement distinctes, de telle sorte que à réaliser :
- une première portion emboutie, s'étendant de manière perpendiculaire à l'axe X, qui définit ledit fond 12 ;
- une deuxième portion emboutie, liée au fond et s'étendant sensiblement le long de l'axe X, qui définit en partie le bord cylindrique 15, ici ladite portion intermédiaire 14, plus précisément sa zone Z_{P} ;
- une troisième portion emboutie, liée à la deuxième portion emboutie et s'étendant sensiblement le long de l'axe X, qui définit le reste du bord cylindrique 15, c'est-à-dire la cannelure 150 et l'extrémité libre 19, ici les zones Z_{C} et Zε ;

Selon une troisième étape (illustrée en FIGURE 9), on forme à froid une cannelure 150 par enfoncements 1500 d'une seule partie parmi celles définissant le bord cylindrique 15, dite zone le de formage. Le formage à froid de la cannelure 150, en particulier les enfoncements 1550, ne sont donc pas réalisés sur la totalité du flanc, mais sur une seule de ses parties. De tels enfoncements définissent ici la forme des dents 155. De préférence, la deuxième portion emboutie (dite portion intermédiaire) peut être radialement à l'intérieur de la deuxième portion emboutie, autrement dit en retrait, de sorte à ne pas gêner la réalisation des enfoncements 1550.

Pour ce faire, la troisième étape peut présenter au moins l'une des caractéristiques décrites ci-dessous, combinées entre elles ou prises indépendamment les unes des autres :
- Les enfoncements 1500 sont réalisés grâce à une série de rouleaux R profilés ;
- Le nombre de rouleaux R peut être égale au nombre d'enfoncements 1500 à réaliser sur le flanc. En variante, le nombre de rouleaux R peut être strictement inférieur au nombre d'enfoncements 1500, par exemple réduit de moitié ;
- Les rouleaux R profilés sont disposés concentriquement autour du flanc du bord cylindrique 15, notamment autour de sa périphérie externe 152 ;
- Les rouleaux R profilés se déplacent le long de la zone le de formage, de préférence sur sa périphérie externe 152, pour réaliser les enfoncements par déformation du flanc;
- En particulier, le flan du bord cylindrique et les rouleaux R profilés sont déplacés l'un par rapport à l'autre, de telle sorte que les rouleaux R profilés déforment rapidement le flan en forme de coupelle ;
- Le déplacement des rouleaux R profilés peut être interrompu sur le flanc et ce, avant la fin de la zone le de formage, par un espacement ΔR dit « marge de sécurité », pour ne pas enfoncer l'extrémité libre du bord cylindrique. L'espacement ΔR tient notamment compte du profil P rotatif et/ou le diamètre extérieur DR dudit rouleau R ;
- Les rouleaux R profilés se déplacent de préférence sensiblement à la même vitesse ;
- Chaque rouleau R profilé a un profil P rotatif, d'axe G rotatif et mobile dans le sens C circonférentiel direct ;
- Les rouleaux R ont le même profil P rotatif, de sorte à réaliser uniformément des dents 155 de même dimensions ;
- Par « profil P rotatif » du rouleau R, on entend ici le contour externe du rouleau R avec lequel il déforme le flanc, en s'enfonçant par déformation. Ce profil P rotatif est défini par le diamètre extérieur DR dudit rouleau R.
- Les axes rotatifs G des profils P rotatifs des rouleaux R profilés sont perpendiculaires à l'axe X de rotation ;
- Chaque axe rotatif G des profils P rotatifs passe par le centre de gravité des rouleaux R ;
- En particulier, l'espacement ΔR est défini entre la zone Z_{E} libre et l'axe rotatif G ;
- Les enfoncements 1550 se développent selon une profondeur dp par rapport au flanc en forme de coupelle ;
- Les enfoncements 1550 se développent au fur et à mesure par un trajet rotatif du profil P rotatif du rouleau R lorsque ce rouleau R profilé se déplace partiellement le long du flanc, sur la zone le de formage ;
- En particulier, les enfoncements 1550 s'étendent radialement vers l'intérieur du bord cylindrique 15, de sorte à former ici une cannelure 150 interne, en particulier avec des dents 155 internes s'étendant radialement ;
- Les rouleaux R profilés sont décalés les uns des autres, de manière à délimiter des parties non enfoncées, ici des espaces 1540 non enfoncées. Les gorges 154 peuvent résulter de ces espaces 1540 non enfoncées.

Dans l'exemple considéré, les espaces 1540 non enfoncées par les rouleaux sont par la suite retravaillées :
- par roulage ou moulage additionnelle, pour définir la forme finale des gorges 154 ;
- par retrait de matière additionnelle, usinage ou découpage, pour réaliser des orifices d'évacuation 195 d'huile ;

On a illustré sur la FIGURE 9 le déplacement d'un rouleau R profilé, défini par un trajet du profil P rotatif des rouleaux R le long de la zone le de formage, selon une direction T de laminage (parallèle à l'axe X). Les rouleaux R partent ici de l'arrière AR (ou bas) du flan et ils roulent vers l'avant AV (ou haut) du flanc en déformant ce dernier.

Tel qu'illustré sur la FIGURE 9, chacun des rouleaux R profilés part radialement depuis l'extérieur du flanc, de manière à déformer la périphérie externe 152 du flanc du bord cylindrique.

On a illustré sur la FIGURE 9 le déplacement maximal du rouleau R ou trajet axial du profil P rotatif, défini par :
- une distance K0 par rapport au fond 12 ;
- une distance K1 par rapport à la zone Z_{P} ;

De ce fait, on interrompe le trajet axial du profil P rotatif desdits rouleaux R aux abord de la fin de zone le de formage, selon un espacement ΔR, de telle sorte à finaliser les enfoncements formant les dents 155. Se faisant :
- Aucun enfoncement n'est formé sur l'extrémité libre 19, les rouleaux R ne franchissant pas la zone Z_{E} libre ;
- On optimise le déplacement des rouleaux R, avec une marge de sécurité proportionnelle à la zone le de formage;
- Notamment, la zone le de formage est la sommede la distance K1 et de l'espacement ΔR ;
- Le profil P rotatif du rouleau R est retiré du flanc, de sorte à laisser derrière lui une empreinte ou un marquage de matière partiellement enfoncé par dudit rouleau R, nommé par la suite un « profil d'extrémités » des enfoncements 1550. En d'autres termes, chaque renfoncement 1500 se rétrécit à partir de la fin de la zone le de formage.

Par « profil d'extrémité » des enfoncements 1550, on entend l'extrémité des enfoncements 1550 formé sur la zone le de formage. Dans l'exemple considérée, les profil d'extrémités des enfoncements 1550 sont issus du prolongement de matière 1700. Les profils d'extrémité des enfoncements 1550 relient les dents 155 à l'extrémité libre 19. De tels profils d'extrémité définissent la forme initiale des portions de raccordement 18.

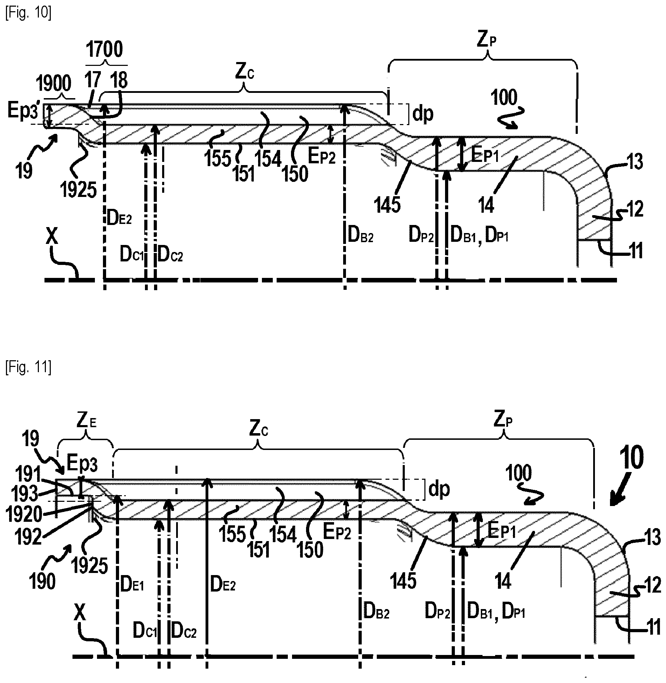

Selon une quatrième étape (illustrée en FIGURE 10), on rectifie l'extrémité libre 19 par déformation de cette dernière, afin de finaliser sa forme finale, nommée par la suite la « portion cintrée ».

Cette forme finale est de préférence de forme cylindrique. On rectifie ainsi l'extrémité libre 19 du bord cylindrique sous une forme cylindrique, de centre et d'axe X. Cette quatrième étape assure la mise en forme finale par déformation plastique de l'extrémité périphérique de la tôle 100.

De préférence, on déforme par cintrage l'extrémité libre 19, de sorte que l'extrémité libre 19 forme une collerette. En d'autres termes, l'extrémité libre 19 est rectifiée et cintrée suivant un certain rayon et un certain angle, de manière adapté à recevoir le support 54. Elle peut être réalisée par une « cintreuse », une matrice profilée ou une presse.

On entend par « portion cintrée » la portion de l'extrémité libre lui donnant sa forme finale, et qui présente un rayon de courbure interne et/ou externe. Ce rayon de courbure peut être amené à varier en fonction de la portée de la structure. A titre d'exemple, cette portion cintrée peut être :
- la forme finale de l'extrémité libre, notamment : le bord libre 193, le prolongement axial 1900 ;
- le raccordement de matière 1700, notamment : les segments de liaison 17, les portions de raccordement 18.

A titre d'exemple, l'extrémité libre 19 est mise en forme et prolongée selon un prolongement 1900, de telle sorte à former une collerette. Dès lors, l'extrémité libre 19 est prolongée par au moins une portion cintrée.

A titre d'exemple, les portions de raccordement 18 sont mises en forme et rectifiées, de sorte à présenter une forme finale convexe. En d'autres termes, la forme des portions de raccordement 18 est :
- initialement de forme concave, selon le profil d'extrémité des enfoncements 1550 (fin de la troisième étape) ;
- finalement de forme convexe, selon la portion cintrée (fin de la quatrième étape) ;

Par « forme concave », on entend ici en section transversale : une forme creuse dans le prolongement de matière 1700, qui peut être incurvée ou arrondie vers l'intérieur, notamment sous forme d'un congé ;

Par « forme convexe », on entend ici en section transversale : une forme bombée dans le prolongement de matière 1700, qui peut être incurvée ou arrondie vers l'extérieur, notamment sous forme d'un arrondi ou rampe ;

Selon une cinquième étape (illustrée en FIGURE 11), on usine l'extrémité libre 19 du bord cylindrique 15 pour former un logement 190. De manière détaillée, on usine l'extrémité libre pour réaliser conjointement :
- une portée cylindrique 191 du logement 190, réalisée intégralement par usinage de l'extrémité libre 19
- une paroi annulaire 1920 du logement 190, réalisée intégralement par usinage de l'extrémité libre 19.

De manière avantageuse, l'usinage est réalisé sur 360 degrés. La portée cylindrique 191 est continue autour de l'axe X. De même, la paroi annulaire 1920 du logement 190 est continue autour de l'axe X.

La surface d'appui axial 192 s'étend radialement de la paroi annulaire 1920 aux extrémités avant AV des dents 155. De ce fait, la surface d'appui axial 192 discontinue du logement 190 est formée :
- en partie par la paroi annulaire 1920 issue de l'usinage de l'extrémité libre ;
- en partie par l'extrémité 1925 des dents 155.

Les extrémités 1925 des dents 155 définissent la forme discontinue de la surface d'appui axial 192 discontinue. On peut définir les extrémités 1925 des dents, telles des portions d'appui de la surface d'appui axial 192 discontinue. La paroi annulaire 1920 issue de l'usinage de l'extrémité libre forme le reste de la surface d'appui axial 192 discontinue du logement 190. Les extrémités 1925 sont de dimension radiale supérieure à celle de la paroi annulaire 1920.

On décrit maintenant l'assemblage du porte-disque 10 et du support 54, tel qu'illustré sur la FIGURE 1 du premier mode de réalisation de l'invention. Cet assemblage comporte, entre autre, les étapes suivantes :
- Selon une première étape, on fournit un élément d'entrainement, ici le support 54, dont son extrémité périphérique, ici son flasque 54b, est de forme adaptée à coopérer à l'extrémité libre 19 du bord cylindrique.
- Selon une deuxième étape, on meten appui le support 54 à l'intérieur de l'extrémité libre 19, de telle sorte que le support 54 soit logé dans le logement 190 de l'extrémité libre 19 du bord cylindrique.
- Selon une troisième étape, on fixe bout à bout le support 54 et l'extrémité libre 19 du bord cylindrique par soudure, notamment par soudure 300 laser. Dès lors, la soudure 300 est localisée radialement à l'intérieur de l'extrémité libre 19 et elle s'étend axialement à l'intérieur du logement 190. De préférence, la soudure 300 est ici continue autour de l'axe X, réalisée en partie sur la paroi annulaire 1920 du logement

On décrit aussi plus en détails le montage des organes de roulement et paliers axiaux du dispositif 1.

De préférence, ces derniers sont montés avant l'assemblage du porte-disque 10 et du support 54 par soudure.

Sur la FIGURE 1, le dispositif 1 comprend en outre un premier organe de roulement agencé dans un espace 80 défini par la première paroi latérale du carter 27a et le support 54.

Un second organe de roulement (non illustré) peut être agencé dans un espace défini par le flasque 52 et la deuxième paroi latérale du carter 27b. Ces espaces 80 sont définis par une paroi fixe, à savoir la première ou deuxième paroi latérale du carter 27a, 27b et une partie du triple embrayage à savoir le moyeu d'alimentation 50, en particulier le support 54 et le flasque 52. Les organes de roulements agencés dans les espaces 80 permettent de bloquer axialement le triple embrayage 3 dans le carter de boite de vitesses 27.

Par ailleurs, le dispositif 1 comprend un troisième organe de roulement agencé dans un espace 81 défini par la première paroi latérale du carter 27a et le support 54 ainsi qu'un quatrième organe de roulement agencé dans un quatrième espace 81' défini par la flasque 52 et la deuxième paroi latérale du carter 27b.

Ces organes de roulement permettent de supporter radialement le triple embrayage 3. Enfin, le dispositif comprend un cinquième organe de roulement logé dans un espace 82 défini par le support 54 et l'élément d'entrée de couple 2. Par ailleurs, le dispositif 1 comprend en outre au moins quatre paliers axiaux 90, 91, 92, 93. Chaque palier axial présente deux faces frontales. Les paliers axiaux sont configurés pour supporter les efforts axiaux du triple embrayage 3. Les paliers axiaux 90, 91, 92, 93 sont respectivement disposés dans un épaulement du support 54, de l'élément d'entrée de couple 2, du premier élément de sortie de couple 6 et du moyeu d'alimentation 50.

Dans l'exemple considéré, les paliers axiaux 90, 91, 92, 93 se chevauchent radialement, ils sont de préférence disposés sur une même hauteur radiale.

De manière avantageuse, les positions des paliers axiaux 90, 91, 92 sont les suivantes :
- Le premier palier axial 90 est interposé entre la paroi interne 54a du support 54 et l'élément d'entrée de couple 2 ;
- Le deuxième palier axial 91 est interposé entre l'élément d'entrée de couple 2 et l'élément de sortie 6 afin de supporter les efforts axiaux de l'élément d'entrée de couple 2 malgré les vitesses de rotation différentes auxquelles peuvent respectivement tourner l'arbre d'entrée et le premier arbre de transmission ;
- Le troisième palier axial 92 est intercalé axialement entre l'élément de sortie de couple 6 définissant le porte-disque de sortie de l'embrayage E1 et l'élément de sortie de couple 7 définissant le porte-disque de sortie de l'embrayage E2 afin de pouvoir transmettre une charge axiale entre les deux porte-disques de sortie qui peuvent tourner à des vitesses différentes lorsque les premier et deuxième embrayages E1, E2 sont configurés dans une configuration différente.

Avantageusement, les paliers 90, 91, 92, 93 sont des paliers à roulement avec un premier et deuxième disque entre lesquels est disposée une pluralité de corps de roulement, de type butée à aiguilles.

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

Notamment les dimensions indiquées ou illustrées ne correspondent qu'à un modèle de porte-disques particulier développé par la demanderesse. L'homme de métier adaptera autant que de besoin le procédé de fabrication selon l'invention à d'autres diamètres nominaux du porte-disques et à d'autres épaisseurs de tôle et desdites zones citées.

## Revendications

1. Procédé de fabrication d'un porte-disques (10) pour système de transmission de couple, comprenant au moins les étapes suivantes :
a) Découpage d'une tôle (100) d'axe (X) de révolution ;
b) Emboutissage de la tôle (100) pour former un fond (12) et un bord cylindrique (15) ;
c) Formage à froid d'une cannelure (150) par enfoncements (1550) d'une partie du bord cylindrique (15), l'extrémité libre (19) du bord cylindrique (15) étant exempte d'enfoncements ;
d) Cintrage de l'extrémité libre (19) du bord cylindrique (15) sous la forme d'une collerette.
e) Usinage de l'extrémité libre (19) du bord cylindrique (15) pour former un logement (190).

2. Procédé de fabrication d'un porte-disques (10) selon la revendication 1, dans lequel la profondeur (dp) d'un enfoncement (1550) réalisé par un outillage de formage à froid, est supérieure à l'épaisseur (Ep3) de l'extrémité libre (19) du bord cylindrique (15) après usinage du logement (190).

3. Procédé de fabrication d'un porte-disques (10) selon la revendication 1 ou 2, dans lequel les enfoncements (1550) réalisés lors du formage à froid, sont décalés axialement par rapport à l'extrémité libre (19) du bord cylindrique (15).

4. Procédé de fabrication d'un porte-disques (10) selon l'une quelconque des revendication 1 à 3, dans lequel les enfoncements (1550) sont réalisés lors du formage à froid sur une zone intermédiaire (Zc) du bord cylindrique (15) distante axialement de l'extrémité du bord cylindrique et distante axialement du fond (12).

5. Procédé de fabrication d'un porte-disques (10) selon la revendication 4, dans lequel ladite zone intermédiaire (Zc) du bord cylindrique s'étend axialement sur 35 à 95 % de la longueur axiale (Z_{B}) disponible du bord cylindrique (15).

6. Procédé de fabrication d'un porte-disques (10) selon l'une quelconque des revendication 1 à 5, dans lequel les enfoncements (1550) sont réalisés depuis l'extérieur du bord cylindrique (15) par un outillage de formage à froid, de sorte à être régulièrement répartis autour de l'axe (X) et à former une cannelure (150) interne.

7. Procédé de fabrication d'un porte-disques (10) selon la revendication 1 à 6, dans lequel une portion intermédiaire (14) du bord cylindrique (15) est délimitée axialement entre le fond (12) et les enfoncements (1550), le diamètre extérieur (D_{P2}) de la portion intermédiaire (14) étant réduit de sorte que l'outillage de formage à froid puisse atteindre la zone intermédiaire (Zc).

8. Porte-disques (10) de forme de révolution selon un axe (X), pour système de transmission de couple, comprenant :
- un fond (12) et
- un bord cylindrique (15) s'étendant axialement à partir du fond (12) jusqu'à une extrémité libre (19), comprenant :
- une cannelure (150) interne adaptée pour supporter un ensemble multidisque d'embrayage (E0), ladite cannelure (150) étant formée d'une alternance de dents (155) et de gorges (154),
**caractérisé en ce qu'**il comprend en outre :
- un logement (190) disposé sur l'extrémité libre (19) du bord cylindrique (15), comprenant une portée cylindrique (191) interne et une surface d'appui axial (192) discontinue.

9. Porte-disques (10) selon la revendication 8, dans lequel la surface d'appui axial (192) discontinue du logement (190) est formée en partie par l'extrémité (1925) des dents (155) de la cannelure (150) interne.

10. Porte-disques (10) selon la revendication 8 ou 9, dans lequel la cannelure (150) interne est décalée axialement par rapport à l'extrémité libre (19) du bord cylindrique (15), de sorte à être intercalée axialement entre le logement (190) et le fond (12).

11. Porte-disques (10) selon l'une quelconque des revendications 8 à 10, dans lequel le diamètre intérieur (D_{L1}) du logement (190) est supérieur au diamètre extérieur (D_{C2}) de la cannelure (150) interne.

12. Porte-disques (10) selon l'une quelconque des revendications 8 à 11, dans lequel l'extrémité libre (19) est formée axialement dans un prolongement (1700, 1900) du diamètre extérieur (D_{B2}) du bord cylindrique (15), en particulier dans le prolongement (1700, 1900) des gorges (154) de la cannelure (150) interne.

13. Porte-disques (10) selon l'une quelconque des revendications 8 à 12, dans lequel il comprend des portions de raccordement (18) liant le diamètre extérieur (D_{C2}) de la cannelure (150) interne à l'extrémité libre (19) du bord cylindrique (15), les portions de raccordement (18) formant par exemple des raidisseurs.

14. Porte-disques (10) selon l'une quelconque des revendications 8 à 13, dans lequel ledit porte-disques (10) est réalisé par le procédé de fabrication selon l'une quelconque des revendications 1 à 7.]

## Patentansprüche

1. Verfahren zur Herstellung eines Scheibenträgers (10) für ein Drehmomentübertragungssystem, beinhaltend mindestens die folgenden Schritte:
a) Zuschneiden eines Blechs (100) mit einer Rotationsachse (X);
b) Tiefziehen des Blechs (100), um einen Boden (12) und einen zylindrischen Rand (15) zu bilden;
c) Kaltumformen einer Riffelung (150) durch Vertiefungen (1550) in einem Teil des zylindrischen Randes (15), wobei das freie Ende (19) des zylindrischen Randes (15) frei von Vertiefungen ist;
d) Biegen des freien Endes (19) des zylindrischen Randes (15) in Form eines Kragens;
e) Bearbeiten des freien Endes (19) des zylindrischen Randes (15), um eine Aufnahme (190) zu bilden.

2. Verfahren zur Herstellung eines Scheibenträgers (10) nach Anspruch 1, wobei die Tiefe (dp) einer Vertiefung (1550), die durch ein Kaltumformungswerkzeug ausgebildet wird, größer als die Dicke (Ep3) des freien Endes (19) des zylindrischen Randes (15) nach Bearbeitung der Aufnahme (190) ist.

3. Verfahren zur Herstellung eines Scheibenträgers (10) nach Anspruch 1 oder 2, wobei die Vertiefungen (1550), die während der Kaltumformung ausgebildet werden, in Bezug auf das freie Ende (19) des zylindrischen Randes (15) axial versetzt sind.

4. Verfahren zur Herstellung eines Scheibenträgers (10) nach einem beliebigen der Ansprüche 1 bis 3, wobei die Vertiefungen (1550) während der Kaltumformung an einem Zwischenbereich (Z_{C}) des zylindrischen Randes (15) ausgebildet werden, der von dem Ende des zylindrischen Randes axial entfernt ist und von dem Boden (12) axial entfernt ist.

5. Verfahren zur Herstellung eines Scheibenträgers (10) nach Anspruch 4, wobei sich der Zwischenbereich (Z_{C}) des zylindrischen Randes axial über 35 bis 95 % der verfügbaren axialen Länge (Z_{B}) des zylindrischen Randes (15) erstreckt.

6. Verfahren zur Herstellung eines Scheibenträgers (10) nach einem beliebigen der Ansprüche 1 bis 5, wobei die Vertiefungen (1550) durch ein Kaltumformungswerkzeug von der Außenseite des zylindrischen Randes (15) her ausgebildet werden, um regelmäßig um die Achse (X) verteilt zu sein und eine Innenriffelung (150) zu bilden.

7. Verfahren zur Herstellung eines Scheibenträgers (10) nach Anspruch 1 bis 6, wobei ein Zwischenabschnitt (14) des zylindrischen Randes (15) zwischen dem Boden (12) und den Vertiefungen (1550) axial begrenzt wird, wobei der Außendurchmesser (D_{P2}) des Zwischenabschnitts (14) so reduziert ist, dass das Kaltumformungswerkzeug den Zwischenbereich erreichen kann (Z_{C}).

8. Scheibenträger (10) mit einer Rotationsform gemäß einer Achse (X) für ein Drehmomentübertragungssystem, beinhaltend:
- einen Boden (12) und
- einen zylindrischen Rand (15), der sich von dem Boden (12) bis zu einem freien Ende (19) axial erstreckt, beinhaltend:
- eine Innenriffelung (150), die dazu angepasst ist, eine Mehrscheibenkupplungsanordnung (E0) zu tragen, wobei die Riffelung (150) durch einen Wechsel aus Zähnen (155) und Nuten (154) gebildet ist,
**dadurch gekennzeichnet, dass** er ferner Folgendes beinhaltet:
- eine Aufnahme (190), die an dem freien Ende (19) des zylindrischen Randes (15) angeordnet ist und die eine zylindrische Innenauflagefläche (191) und eine unterbrochene axiale Anlagefläche (192) beinhaltet.

9. Scheibenträger (10) nach Anspruch 8, wobei die unterbrochene axiale Anlagefläche (192) der Aufnahme (190) teilweise durch das Ende (1925) der Zähne (155) der Innenriffelung (150) gebildet wird.

10. Scheibenträger (10) nach Anspruch 8 oder 9, wobei die Innenriffelung (150) mit Bezug auf das freie Ende (19) des zylindrischen Randes (15) axial versetzt ist, sodass sie zwischen die Aufnahme (190) und den Boden (12) axial eingefügt ist.

11. Scheibenträger (10) nach einem beliebigen der Ansprüche 8 bis 10, wobei der Innendurchmesser (D_{L1}) der Aufnahme (190) größer als der Außendurchmesser (D_{C2}) der Innenriffelung (150) ist.

12. Scheibenträger (10) nach einem beliebigen der Ansprüche 8 bis 11, wobei das freie Ende (19) in einer Verlängerung (1700, 1900) des Außendurchmessers (D_{B2}) des zylindrischen Randes (15), insbesondere in der Verlängerung (1700, 1900) der Nuten (154) der Innenriffelung (150), axial gebildet ist.

13. Scheibenträger (10) nach einem beliebigen der Ansprüche 8 bis 12, wobei er Anschlussabschnitte (18) beinhaltet, die den Außendurchmesser (D_{C2}) der Innenriffelung (150) mit dem freien Ende (19) des zylindrischen Randes (15) verbinden, wobei die Anschlussabschnitte (18) beispielsweise Versteifungen bilden.

14. Scheibenträger (10) nach einem beliebigen der Ansprüche 8 bis 13, wobei der Scheibenträger (10) durch das Herstellungsverfahren nach einem beliebigen der Ansprüche 1 bis 7 ausgebildet wird.

## Claims

1. Method for manufacturing a disc carrier (10) for a torque transmission system, comprising at least the following steps:
a) Cutting a sheet (100) having an axis (X) of revolution;
b) Stamping the sheet (100) to form a bottom (12) and a cylindrical edge (15);
c) Cold-forming a spline (150) by depressions (1550) of a part of the cylindrical edge (15), the free end (19) of the cylindrical edge (15) being free from depressions;
d) Bending the free end (19) of the cylindrical edge (15) in the form of a collar;
e) Machining the free end (19) of the cylindrical edge (15) to form a housing (190).

2. Method for manufacturing a disc carrier (10) according to Claim 1, in which the depth (dp) of a depression (1550) produced by a cold-forming tooling is greater than the thickness (Ep3) of the free end (19) of the cylindrical edge (15) after machining the housing (190) .

3. Method for manufacturing a disc carrier (10) according to Claim 1 or 2, in which the depressions (1550) produced during the cold-forming are offset axially with respect to the free end (19) of the cylindrical edge (15) .

4. Method for manufacturing a disc carrier (10) according to any one of Claims 1 to 3, in which the depressions (1550) are produced during the cold-forming on an intermediate zone (Z_{C}) of the cylindrical edge (15) that is axially distant from the end of the cylindrical edge and axially distant from the bottom (12).

5. Method for manufacturing a disc carrier (10) according to Claim 4, in which said intermediate zone (Z_{C}) of the cylindrical edge extends axially over 35 to 95% of the available axial length (Z_{B}) of the cylindrical edge (15).

6. Method for manufacturing a disc carrier (10) according to any one of Claims 1 to 5, in which the depressions (1550) are produced from the exterior of the cylindrical edge (15) by a cold-forming tooling so as to be uniformly distributed about the axis (X) and to form an internal spline (150).

7. Method for manufacturing a disc carrier (10) according to Claims 1 to 6, in which an intermediate portion (14) of the cylindrical edge (15) is delimited axially between the bottom (12) and the depressions (1550), the outer diameter (D_{P2}) of the intermediate portion (14) being reduced such that the cold-forming tooling can reach the intermediate zone (Z_{C}).

8. Disc carrier (10) having a shape of revolution about an axis (X), for a torque transmission system, comprising:
- a bottom (12) and
- a cylindrical edge (15) extending axially from the bottom (12) to a free end (19), comprising:
- an internal spline (150) designed to support a multi-disc clutch assembly (E0), said spline (150) being formed by an alternating arrangement of teeth (155) and grooves (154), **characterized in that** it further comprises:
- a housing (190) arranged on the free end (19) of the cylindrical edge (15), comprising an internal cylindrical bearing surface (191) and a discontinuous axial support surface (192).

9. Disc carrier (10) according to Claim 8, in which the discontinuous axial support surface (192) of the housing (190) is formed in part by the end (1925) of the teeth (155) of the internal spline (150).

10. Disc carrier (10) according to Claim 8 or 9, in which the internal spline (150) is offset axially with respect to the free end (19) of the cylindrical edge (15) so as to be interposed axially between the housing (190) and the bottom (12).

11. Disc carrier (10) according to any one of Claims 8 to 10, in which the inner diameter (D_{L1}) of the housing (190) is greater than the outer diameter (D_{C2}) of the internal spline (150).

12. Disc carrier (10) according to any one of Claims 8 to 11, in which the free end (19) is formed axially in an extension (1700, 1900) of the outer diameter (D_{B2}) of the cylindrical edge (15), in particular in the extension (1700, 1900) of the grooves (154) of the internal spline (150) .

13. Disc carrier (10) according to any one of Claims 8 to 12, in which it comprises connection portions (18) connecting the outer diameter (D_{C2}) of the internal spline (150) to the free end (19) of the cylindrical edge (15), the connection portions (18) forming stiffeners, for example.

14. Disc carrier (10) according to any one of Claims 8 to 13, in which said disc carrier (10) is produced by the manufacturing method according to any one of Claims 1 to 7.
